# FASCICULE DE BREVET EUROPEEN

(11) **EP 2 683 541 B1**
(45) Date de publication et mention de la délivrance du brevet: **11.05.2016**
(21) Numéro de dépôt: 12706837.7
(22) Date de dépôt: 01.03.2012
(51) Int. Cl.: B29C 49/56, B29C 33/30, B29C 49/36

(54) **SYSTEME AUTOMATISE POUR LE CHANGEMENT DE MOULE D'UNE UNITE DE MOULAGE EQUIPANT UNE MACHINE DE FABRICATION DE RECIPIENTS**
AUTOMATISIERTES SYSTEM ZUM WECHSELN EINER FORM EINER FORMEINHEIT, DAS EINE MASCHINE ZUR HERSTELLUNG VON BEHÄLTERN AUSRÜSTET
AUTOMATED SYSTEM FOR CHANGING A MOLD OF A MOLDING UNIT WITH WHICH A MACHINE FOR MANUFACTURING CONTAINERS IS PROVIDED

(30) Priorité: 08.03.2011 FR 1151896
(43) Date de publication de la demande: 15.01.2014
(73) Titulaire: Sidel Participations, 76930 Octeville sur Mer (FR)
(72) Inventeur: CIRETTE, Damien, F-76930 Octeville sur Mer (FR); PASQUIER, Hervé, F-76930 Octeville sur Mer (FR); NORTURE, Michel, F-76930 Octeville sur Mer (FR); MICHEL, Jocelyn, F-76930 Octeville sur Mer (FR)
(74) Mandataire: Siloret, Patrick
(86) Numéro de dépôt international: PCT/EP2012/053486
(87) Numéro de publication internationale: WO 2012/119913

(56) Documents cités:
- FR-A1- 2 646 802

## Description

L'invention concerne un système automatisé pour le changement de moule d'une unité de moulage équipant une machine de fabrication de récipients.

L'invention concerne plus particulièrement un système automatisé pour le changement de moule d'une unité de moulage équipant une machine de fabrication de récipients par formage, au moyen d'au moins un fluide sous pression, d'une préforme en matière plastique préalablement conditionnée thermiquement.

On connaît de l'état de la technique des machines de fabrication de récipients, en particulier de bouteilles en matière thermoplastique, lesdites machines étant notamment, mais non exclusivement, des machines dites "rotatives".

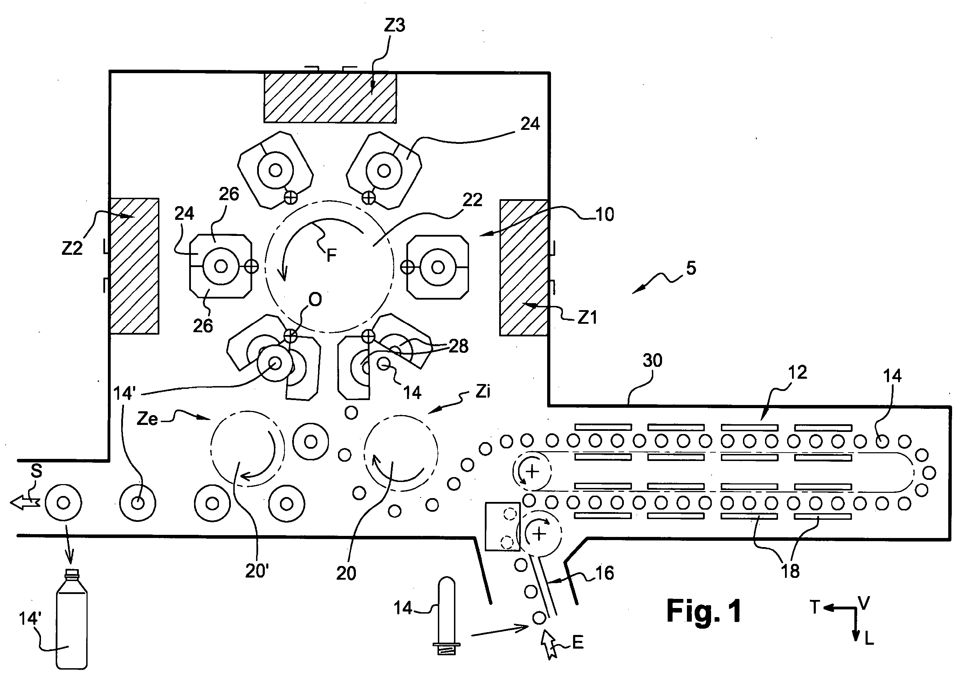

On a représenté sur la figure 1 à titre d'exemple non limitatif, une installation 5 selon l'état de la technique comportant une machine 10 de fabrication de récipients de type rotative, installation 5 dans laquelle ladite machine 10 (encore appelée "souffleuse") est notamment associée à un four 12 de conditionnement thermique des préformes 14.

L'installation 5 comporte un dispositif 16 d'alimentation en préformes 14 (ou ébauches) qui sont introduites dans l'installation par une entrée E qui communique avec une zone d'entrée du four 12.

Le four 12 comporte des moyens 18 de chauffage des préformes 14 qui sont agencés sur tout ou partie d'un parcours, ici en "U", s'étendant de la zone d'entrée du four dans laquelle les préformes 14 sont amenées par le dispositif 16 d'alimentation à une zone de sortie du four 12 au voisinage de laquelle est agencé un premier dispositif 20 de transfert.

Le premier dispositif 20 de transfert est destiné à transférer les préformés 14 conditionnées thermiquement depuis la zone de sortie du four 12 jusqu'à une zone Zi, dite d'introduction, des préformes 14 dans la machine 10 de fabrication.

La machine 10 de fabrication comporte un carrousel 22 équipé d'une série d'unités 24 de moulage réparties circonférentiellement et des moyens de soufflage ou d'étirage-soufflage (non représentés) associés auxdites unités 24.

L'unité 24 de moulage comporte deux porte-moules 26 qui sont montés mobiles entre une position ouverte et une position fermée de l'unité de moulage, par exemple lorsque l'unité 24 de moulage est de type "portefeuille" tel qu'illustré à la figure 1, les porte-moules 26 (en variante au moins l'un) sont montés mobiles en rotation l'un par rapport à l'autre autour d'un axe O de rotation.

Chaque unité 24 de moulage comporte un moule comportant au moins deux éléments 28 de moulage fixés chacun de manière démontable à l'un des porte-moules 26.

En position fermée de l'unité 24 de moulage, les éléments 28 de moulage sont accolés dans une position jointe dans laquelle leurs faces internes définissent un plan de joint, la réunion de chacune de leur demi-empreinte de moulage définissant le volume, la forme, l'aspect, etc. du récipient à obtenir par formage d'une préforme.

Une telle machine 10 de fabrication est susceptible de fonctionner selon différents modes de fonctionnement.

Selon un mode de fonctionnement de la machine, dit de production, la machine 10 est utilisée conjointement au four 12 de l'installation 5 pour la fabrication de récipients.

Dans un tel mode de fonctionnement de la machine 10, le carrousel 22 est entraîné en rotation de manière que chaque unité 24 de moulage parcourt un cycle de transformation depuis ladite zone Zi d'introduction jusqu'à une zone Ze, dite d'évacuation, des récipients 14' dans laquelle un deuxième dispositif 20' de transfert est agencé.

Le deuxième dispositif 20' de transfert est destiné à transférer les récipients 14', obtenus à partir des préformes 14, depuis la zone Ze d'évacuation de la machine 10 jusqu'à une sortie S de l'installation 5.

Comme l'illustre la figure 1, les zones d'introduction des préformes 14 et d'évacuation des récipients 14' sont adjacentes et situées dans la partie avant de la machine 10 de sorte que le cycle de transformation est réalisé sur la quasi-totalité de la circonférence de la machine.

L'installation 5 comporte généralement une enceinte 30 de protection disposée de manière à entourer au moins la machine 10 de fabrication et le four 12.

En mode de production de la machine 10 illustré par la figure 1, la fabrication de récipients en matière plastique, tels que des bouteilles, flacons, etc. est donc effectuée dans les unités 24 de moulage par formage, tel que par soufflage ou par étirage-soufflage, de préformes 14 préalablement chauffées dans le four 12 de conditionnement thermique.

Toutefois, si le mode de production constitue le principal mode de fonctionnement de la machine, la machine 10 présente également un autre mode de fonctionnement, dit d'intervention, qui est tout aussi important.

En effet, lesdits au moins deux éléments 28 de moulage formant le moule et comportant chacun une demi-empreinte sont fixés aux porte-moules 26 par l'intermédiaire de moyens de fixation (non représentés) aptes à en permettre le démontage et le montage afin de permettre d'effectuer un changement du moule de l'unité 24 de moulage. Le document FR-A-2 646 802 décrit un système selon le préamble de la revendication 1.

Le document EP-B1-0.821.641 au nom de la demanderesse décrit différents perfectionnements apportés notamment sur la structure d'une unité 24 de moulage, chaque élément 28 de moulage étant réalisé en deux parties respectivement appelées coquille et porte-coquille.

On se reportera pour de plus amples détails à ce document donné toutefois uniquement à titre d'exemple non limitatif.

Un tel changement de moule est en particulier requis pour procéder à des fabrications de récipients de formes et/ou de dimensions différentes ou encore à leur remplacement en cas d'endommagement et/ou d'usure des éléments de moulage.

En fonction de l'utilisation de la machine 10, le mode de fonctionnement, dit d'intervention, au cours duquel la production de récipient par la machine est arrêtée, est plus ou moins fréquemment mis en oeuvre.

Dans certains cas, les changements de moule sont très fréquents de sorte qu'une attention encore plus grande est alors portée au temps nécessaire pour procéder au changement du moule d'une unité 24 de moulage.

Or, la durée requise pour procéder au changement d'un moule est à multiplier par le nombre d'unités 24 de moulage que comporte la machine 10, lequel nombre est par exemple compris entre 6 et 34 unités de moulage.

Les opérations requises pour le changement du moule d'une unité 24 de moulage sont nombreuses et toutes réalisées manuellement par un opérateur, parfois deux opérateurs, de sorte que la durée d'intervention est souvent jugée trop longue par les utilisateurs, en particulier en cas de changements fréquents.

En effet, l'immobilisation dé la machine 10 durant ces opérations représente un coût important du fait de l'arrêt complet de la fabrication qui l'accompagne, les opérations de changement de moule, plus ou moins fréquentes selon les utilisateurs, sont par conséquent très coûteuses car longues et complexes.

La présente invention a notamment pour but de résoudre les inconvénients précités et vise tout particulièrement à réduire la durée nécessaire pour effectuer un changement du moule d'une unité de moulage, tout en améliorant les conditions générales en mode d'intervention de la machine, et cela tant sur le plan de la sécurité que de l'ergonomie.

Dans ce but, l'invention propose un système automatisé pour le changement de moule d'une unité de moulage équipant une machine de fabrication de récipients, ladite unité de moulage comportant :
- au moins deux porte-moules qui sont montés mobiles entre une position ouverte et une position fermée de l'unité de moulage et un moule qui comporte au moins deux éléments de moulage fixés chacun de manière démontable à un porte-moule associé par des moyens de fixation,
- un dispositif d'ouverture et de fermeture de l'unité de moulage comportant au moins un organe de commande apte à déplacer au moins l'un des porte-moules entre lesdites positions ouverte et fermée, et
- un dispositif de verrouillage de l'unité de moulage comportant au moins un organe de commande apte à actionner des moyens de verrouillage qui sont montés mobiles entre :
   - une position verrouillée dans laquelle les porte-moules de l'unité de moulage sont maintenus en position fermée par lesdits moyens de verrouillage, et
   - une position déverrouillée dans laquelle les porte-moules sont libres d'être déplacés entre les positions fermée et ouverte.

Conformément à l'invention, le système comporte au moins un module de commande comportant au moins :
- un premier dispositif d'actionnement qui, associé au dispositif de verrouillage de l'unité de moulage, comporte des premiers moyens de manoeuvre qui, lorsque l'unité de moulage occupe une position de référence déterminée par rapport audit module, coopèrent avec l'organe de commande du dispositif de verrouillage pour commander sélectivement les moyens de verrouillage entre lesdites positions verrouillée et déverrouillée, lesdits premiers moyens de manoeuvre étant montés mobiles par rapport au module, entre au moins :
   - une première position correspondant à la position verrouillée des moyens de verrouillage du dispositif de verrouillage de l'unité de moulage ; et
   - une deuxième position correspondant à la position déverrouillée des moyens de verrouillage du dispositif de verrouillage de l'unité de moulage,
- un deuxième dispositif d'actionnement qui, associé dispositif d'ouverture et de fermeture de l'unité de moulage, comporte des deuxièmes moyens de manoeuvre qui sont distincts des premiers moyens de manoeuvre du premier dispositif d'actionnement et qui, lorsque l'unité de moulage occupe ladite position de référence déterminée par rapport audit module, coopèrent avec l'organe de commande du dispositif d'ouverture et de fermeture pour commander sélectivement l'ouverture et la fermeture de l'unité de moulage, lesdits deuxièmes moyens de manoeuvre étant montés mobiles par rapport au module, entre au moins :
   - une première position correspondant à la position fermée de l'unité de moulage ; et
   - une deuxième position correspondant à la position ouverte de l'unité de moulage.

Avantageusement, le système selon l'invention comporte au moins un module apte à procurer une assistance au changement de moule d'une unité de moulage par l'automatisation totale des opérations mises en oeuvre pour réaliser un tel changement de moule.

Le Demanderesse a déjà proposé des solutions pour automatiser totalement ou partiellement certaines des opérations mises en oeuvre pour réaliser un changement de moule d'une unité de moulage équipant une machine de fabrication de récipients.

La demande de brevet européen No. 10174852.3 (non publiée) déposée le 01 septembre 2010 au nom de la Demanderesse propose une première conception d'un module de commande pour automatiser les opérations de déverrouillage et de verrouillage et d'ouverture et de fermeture de l'unité de moulage lors d'un changement du moule de ladite unité.

Selon cette première conception, le module de commande est susceptible d'occuper au moins un état de veille et un état d'utilisation associé à un mode de fonctionnement de la machine, dit d'intervention, pour procéder au moins au changement du moule de l'unité de moulage et dans lequel ledit module est apte à commander sélectivement un dispositif de verrouillage et un dispositif d'ouverture/fermeture de l'unité de moulage.

Dans cette première conception, le module de commande comporte des premier et deuxième dispositifs d'actionnement qui sont respectivement associés au dispositif de verrouillage et au dispositif d'ouverture/fermeture de l'unité de moulage.

L'organe de commande du dispositif de verrouillage et l'organe de commande du dispositif d'ouverture/fermeture sont respectivement actionnés, sous l'action d'un déplacement relatif, par une came que comporte chacun desdits premier et deuxième dispositifs d'actionnement du module, l'actionnement résultant du déplacement relatif de l'unité de moulage par rapport au module et par rapport aux cames occupant une position de travail.

Par comparaison, le module de commande selon l'invention se distingue notamment de cette première conception par l'absence de recours à un tel déplacement relatif de l'unité de moulage par rapport au module pour provoquer l'actionnement du dispositif de verrouillage et du dispositif d'ouverture/fermeture.

Dans l'invention, le module de commande comporte des premiers et deuxièmes dispositifs d'actionnement respectivement associés au dispositif de verrouillage et au dispositif d'ouverture/fermeture de l'unité de moulage et dont des premiers et deuxièmes moyens de manoeuvre sont montés mobiles par rapport au module pour actionner chaque organe de commande et cela alors que l'unité de moulage occupe et demeure dans une position de référence déterminée par rapport au module, lequel occupe également une position fixe.

La demande internationale de brevet PCT/EP2010/070201 (non publiée) déposée le 20 décembre 2010 au nom de la Demanderesse propose une deuxième conception d'un module de commande formant au moins une partie d'un système d'assistance au changement de moule.

Selon cette deuxième conception, le module de commande comporte un dispositif d'actionnement comportant un organe de manoeuvre destiné à coopérer avec l'organe de commande du dispositif de verrouillage de l'unité de moulage.

Dans cette deuxième conception, le module comporte un unique organe de manoeuvre qui coopère seulement avec l'organe de commande des moyens de verrouillage de l'unité de moulage, d'une part, pour provoquer le déverrouillage et le verrouillage et, d'autre part, pour provoquer l'ouverture ou la fermeture de l'unité de moulage.

Par comparaison, le module de commande selon l'invention se distingue de cette deuxième conception par le fait que l'actionnement du dispositif de verrouillage et du dispositif d'ouverture/fermeture de l'unité de moulage est réalisé respectivement par des premiers moyens de manoeuvre et par des deuxièmes moyens de manoeuvre, lesquels deuxièmes moyens de manoeuvre sont distincts des premiers moyens de manoeuvre.

Avantageusement, l'invention propose donc une troisième et nouvelle conception d'un module de commande grâce auquel au moins une partie des opérations, de préférence toutes, effectuées pour opérer un changement de moule d'une unité de moulage sont automatisées et réalisées dans un temps réduit.

En effet, le système automatisé selon l'invention permet de supprimer toute intervention manuelle d'un opérateur et cela au moins pour les opérations de déverrouillage et de verrouillage de l'unité de moulage ainsi que les opérations d'ouverture et de fermeture de l'unité de moulage réalisées pour procéder au changement du moule de ladite unité, c'est à dire aux opérations de démontage et montage des éléments de moulage.

Grâce à l'invention, la durée nécessaire à la mise en oeuvre des opérations de changement des moules est considérablement réduite par rapport au temps requis auparavant pour réaliser ces mêmes opérations.

Avantageusement, le système automatisé selon l'invention participe grâce au module de commande à la réduction de la pénibilité pour l'opérateur de telles opérations qui sont fatigantes, répétitives et mises en oeuvres dans un environnement présentant souvent peu d'ergonomie.

De préférence, le système comporte un nombre (n) de modules qui est supérieur ou égal à deux de manière à traiter simultanément autant d'unité de moulage associée chacune à un module, grâce à quoi on réduit encore la durée totale requise au changement des .moules de tout ou partie des unités de moulage d'une machine.

Selon d'autres caractéristiques de l'invention :
- le premier dispositif d'actionnement comporte au moins un premier actionneur pour déplacer sélectivement, entre au moins la première position et la deuxième position, un premier organe de manoeuvre formant lesdits premiers moyens de manoeuvre ;
- le deuxième dispositif d'actionnement comporte au moins un actionneur principal pour déplacer sélectivement, entre au moins la première position et la deuxième position, un deuxième organe de manoeuvre formant lesdits deuxièmes moyens de manoeuvre ;
   -- lesdits deuxièmes moyens de manoeuvre de l'organe de commande du dispositif d'ouverture/fermeture sont constitués par une pince commandée comportant deux mors dont au moins l'un desdits mors est monté mobile, par rapport à l'autre mors, entre :
      - une position de repos de la pince dans laquelle les mors sont écartés l'un de l'autre, et
      - une position de travail de la pince dans laquelle lesdits mors, rapprochés pour coopérer avec ledit deuxième organe de commande, sont aptes à l'entraîner en déplacement entre lesdites première et deuxième positions ;
   -- le deuxième dispositif d'actionnement du module comporte au moins un actionneur secondaire pour déplacer sélectivement ledit au moins un mors mobile entre lesdites position de repos et de travail de la pince ;
- le module de commande comporte des moyens de liaison aptes à lier en déplacement les premiers moyens de manoeuvre du premier dispositif d'actionnement avec les deuxièmes moyens de manoeuvre du deuxième dispositif d'actionnement ;
   -- les moyens de liaison sont constitués par au moins une bielle dont une extrémité est liée aux premiers moyens de manoeuvre du premier dispositif d'actionnement et dont l'autre extrémité est liée aux deuxièmes moyens de manoeuvre du deuxième dispositif d'actionnement ;
- le module de commande comporte un troisième dispositif d'actionnement qui, associé aux moyens de fixation, commande sélectivement les moyens de fixation pour provoquer un changement d'état correspondant à la libération ou la fixation, au porte-moule associé, de chacun desdits au moins deux éléments de moulage du moule ;
   -- le troisième dispositif d'actionnement associé aux moyens de fixation comporte au moins un actionneur qui est apte à coopérer, alors que l'unité de moulage occupe la position fermée, avec au moins un organe d'actionnement des moyens de fixation, associés à l'un desdits éléments de moulage, pour commander le déplacement des moyens de fixation entre au moins une position de fixation et une position de libération ;
- le module de commande comporte un quatrième dispositif d'actionnement qui, associé à des moyens de support d'un fond de moule complémentaire desdits au moins deux éléments de moulage du moule, est apte à provoquer sélectivement la séparation dudit fond de moule et des moyens de support associés ou l'assemblage dudit fond de moule et des moyens de support associés ;
   -- le quatrième dispositif d'actionnement comporte au moins des moyens de manoeuvre mus par un actionneur pour entraîner sélectivement en déplacement lesdits moyens de support, respectivement entre une position haute et une position basse, afin de provoquer sélectivement la séparation ou l'assemblage entre le fond de moule et les moyens de support associés.
- le module de commande comporte des moyens de contrôle qui sont aptes à contrôler qu'un fond de moule, complémentaire desdits au moins deux éléments de moulage du moule, est correctement verrouillé par des moyens de verrouillage intervenant entre le fond de moule et les moyens de support associés ;
- le module de commande comporte un cinquième dispositif d'alimentation, comportant des moyens d'alimentation en énergie aptes à fournir sélectivement de l'énergie pourl'actionnement des moyens de fixation des éléments de moulage et/ou pour l'actionnement des moyens de verrouillage du fond de moule avec les moyens de support associés ;
   -- les moyens d'alimentation sont aptes à fournir sélectivement de l'énergie, au troisième dispositif de commande associé aux moyens de fixation, pour alimenter en énergie au moins un actionneur qui, alors que l'unité de moulage occupe la position fermée, est apte à agir sur au moins un organe d'actionnement des moyens de fixation associés à l'un desdits éléments de moulage pour commander le déplacement desdits moyens de fixation entre au moins une position de fixation et une position de libération.
   -- les moyens d'alimentation sont aptes à fournir sélectivement de l'énergie aux moyens de verrouillage du fond de moule pour provoquer le déplacement d'un organe d'actionnement apte à provoquer un changement d'état des moyens de verrouillage entre une position verrouillée et une position déverrouillée ;
   -- les moyens d'alimentation en énergie sont montés mobiles entre au moins :
      - une position d'alimentation dans laquelle lesdits moyens d'alimentation, reliés à une source d'énergie, sont raccordés à l'unité de moulage de manière à pouvoir fournir de l'énergie,
      - une position d'attente dans laquelle les moyens d'alimentation étant séparés physiquement de l'unité de moulage sont inaptes à fournir de l'énergie ;
   -- les moyens d'alimentation en énergie comportent au moins un moyen de raccordement étanche qui est monté mobile entre la position d'attente et la position d'alimentation dans laquelle ledit moyen de raccordement coopère avec un moyen complémentaire de raccordement qui, solidaire de l'unité de moulage, est apte à raccorder à la source d'énergie au moins un actionneur du dispositif de commande des moyens de fixation et/ou aux moyens de verrouillage commandés du fond de moule avec les moyens de support associés ;
- le module de commande comporte un sixième dispositif de contrôle qui, associé aux moyens de fixation des éléments de moulage du moule, est apte à contrôler la fixation par les moyens de fixation desdits au moins deux éléments de moulage du moule aux porte-moules associés ;
   -- le sixième dispositif de contrôle comporte des moyens de contrôle qui, constitués par au moins un capteur, sont aptes à détecter la position occupée par une pièce mobile que comporte ledit au moins un actionneur de manière à contrôler, en fonction de la position occupée par ladite pièce mobile, que lesdits moyens de fixation occupent la position verrouillée ;
   -- les moyens de contrôle sont aptes à occuper au moins un état inactif et un état actif dans lequel lesdits moyens de contrôle sont aptes à déterminer la position occupée par lesdits moyens de fixation ;
   -- les moyens de contrôle sont solidaires d'au moins un bras de support qui, commandé en déplacement par un actionneur associé, est monté mobile entre au moins :
      - une position de contrôle, correspondant à l'état actif, dans laquelle lesdits moyens de contrôle sont positionnés par rapport auxdits actionneurs associés aux moyens de fixation pour déterminer la position occupée par lesdits moyens de fixation, et
      - une position escamotée, correspondant à l'état inactif, dans laquelle l'actionneur associé, et le bras de support des moyens de contrôle sont escamotés pour ne pas interférer avec l'unité de moulage ;
- le module de commande comporte des moyens de butée qui sont aptes à intervenir sélectivement pour bloquer temporairement, avant que la position fermée ne soit atteinte, l'unité de moulage dans une position intermédiaire donnée pour laquelle les moyens de fixation sont susceptibles d'occuper une position, dite de préfixation, qui correspond à une position dans laquelle les moyens de fixation sont partiellement engagés sans que soit atteinte la position de fixation des éléments de moulage ;
   -- les moyens de butée sont montés mobiles entre au moins :
      - une position escamotée dans laquelle les moyens de butée n'interfèrent pas avec les deuxièmes moyens de manoeuvre de l'organe de commande du dispositif d'ouverture/fermeture qui sont libres d'être commandés en déplacement entre les première et deuxième positions, et
      - une position déployée dans laquelle les moyens de butée sont aptes à coopérer avec les deuxièmes moyens de manoeuvre pour bloquer temporairement l'unité de moulage dans ladite position intermédiaire donnée dans laquelle les moyens de fixation des éléments de moulage sont susceptibles d'occuper ladite position de préfixation ;
- le module de commande du système est susceptible d'occuper au moins :
   • un état de veille associé à un mode de fonctionnement de la machine, dit de production, pour la fabrication de récipients par la machine, et
   • un état d'utilisation associé à un autre mode de fonctionnement de la machine, dit d'intervention, dans lequel ledit module est apte à commander sélectivement au moins le dispositif de verrouillage et le dispositif d'ouverture/ fermeture de l'unité de moulage pour automatiser au moins l'actionnement des organes de commande desdits dispositifs lors du changement de moule d'une unité de moulage ;
      -- au moins les actionneurs desdits premier et deuxième dispositif d'actionnement constituent des moyens de changement d'état du module de commande entre l'état de veille et l'état d'utilisation ;
- le système comporte une unité de contrôle apte à commander ledit au moins un module de commande en pilotant en synchronisation, selon une séquence déterminée, au moins les actionneurs des premier et deuxième dispositifs dudit module de commande pour réaliser automatiquement tout ou partie des opérations changement de moule d'une unité de moulage ;
- le système comporte au moins deux modules de commande qui sont commandés, simultanément ou successivement, par au moins une unité de contrôle pour effectuer un cycle de changement de moule sans changement des positions de référence déterminées des unités de moulage associées.

D'autres caractéristiques et avantages de la présente invention apparaîtront à la lecture de la description détaillée qui va suivre pour la compréhension de laquelle on se reportera aux dessins dans lesquels :
- la figure 1 est une vue de dessus qui représente schématiquement une installation conforme à l'état de la technique comportant un exemple de machine pour la fabrication de récipients et susceptible d'être équipée, selon l'invention, d'un système automatisé comportant au moins un module de commande pour le changement de moule d'une unité de moulage;

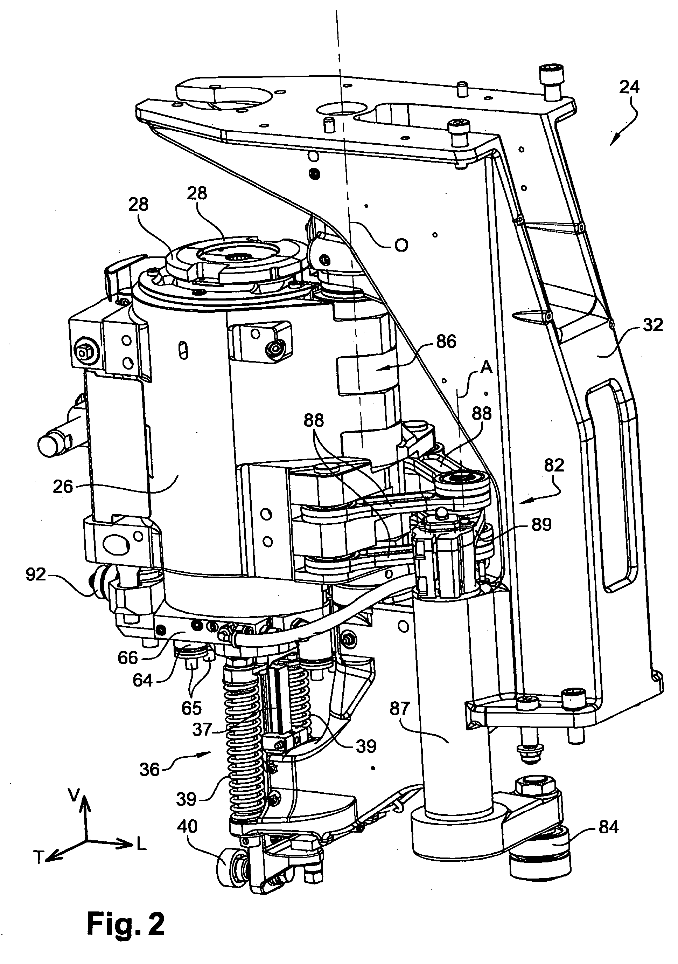

- les figures 2 à 4 sont des vues en perspective qui représentent un exemple de réalisation d'une unité de moulage destinée à équiper l'un des postes d'une machine selon la figure 1, ladite unité étant respectivement illustrée de trois quarts arrière en position fermée, de face en position ouverte et de trois-quarts en position ouverte avec un moule uni extrait ;

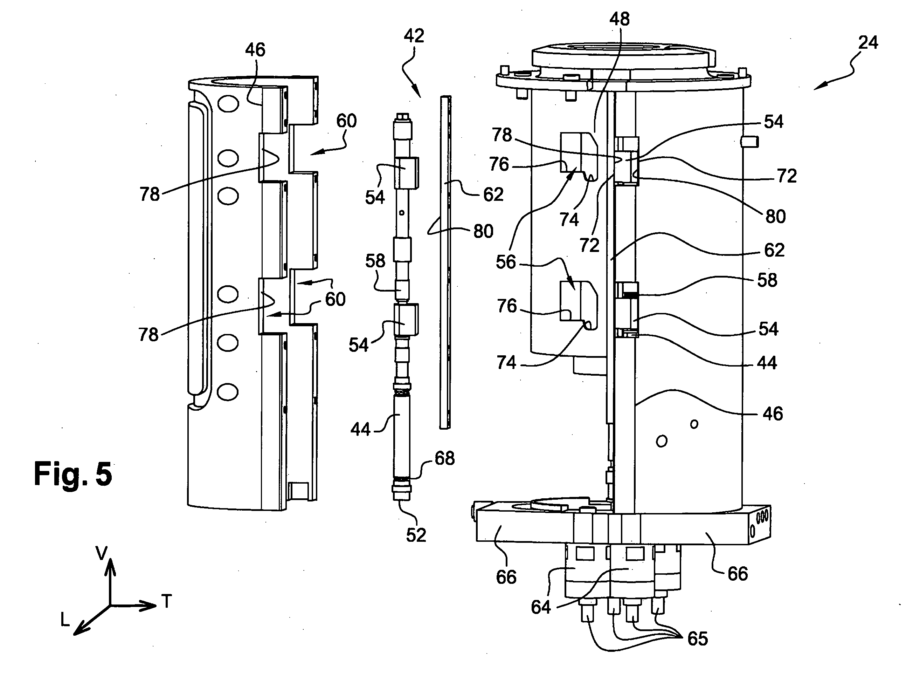

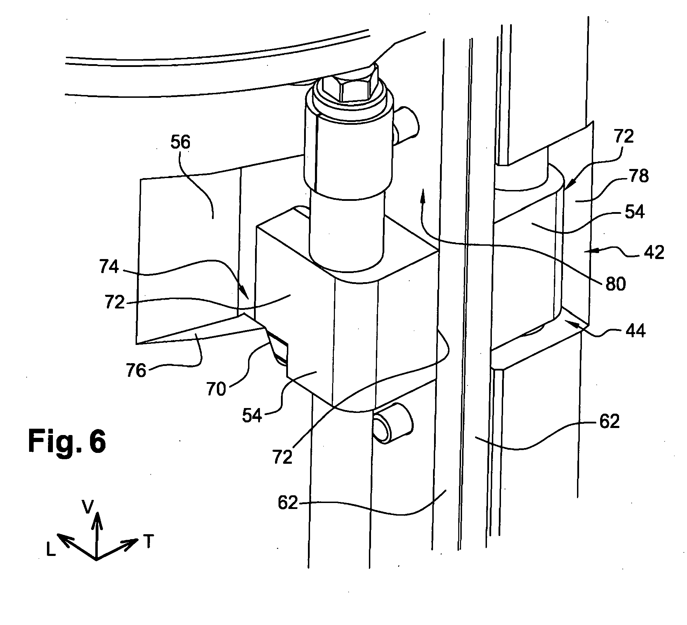

- les figures 5 et 6 sont des vues en perspective qui représentent, en partie en éclaté, les moyens de fixation des éléments de moulage du moule et une vue de détail des moyens de fixation ;

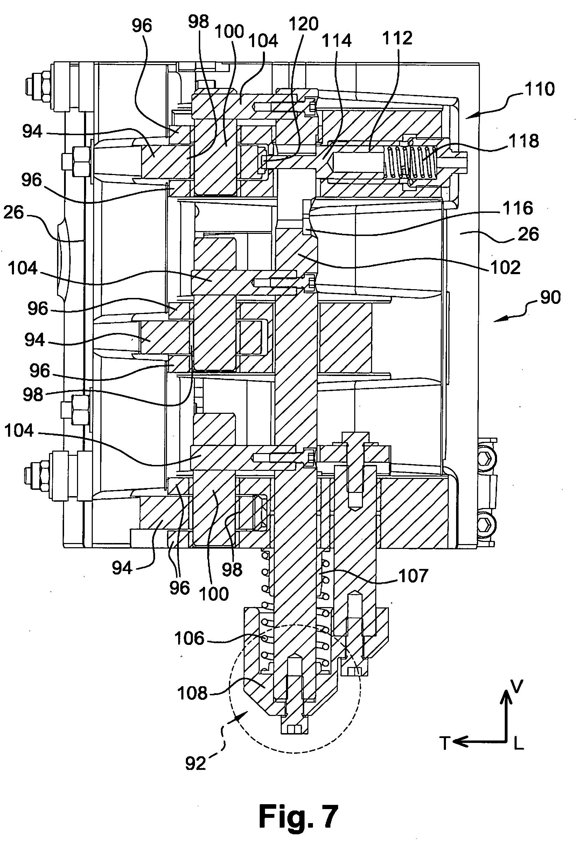

- la figure 7 est une vue en coupe qui représente en détail la structure d'un exemple de réalisation d'un dispositif de verrouillage d'une unité de moulage, ledit dispositif de verrouillage comportant un mécanisme de blocage des moyens de verrouillage en position déverrouillée, et illustrant respectivement le dispositif de verrouillage en position verrouillée et le mécanisme de blocage associé en position inactive;

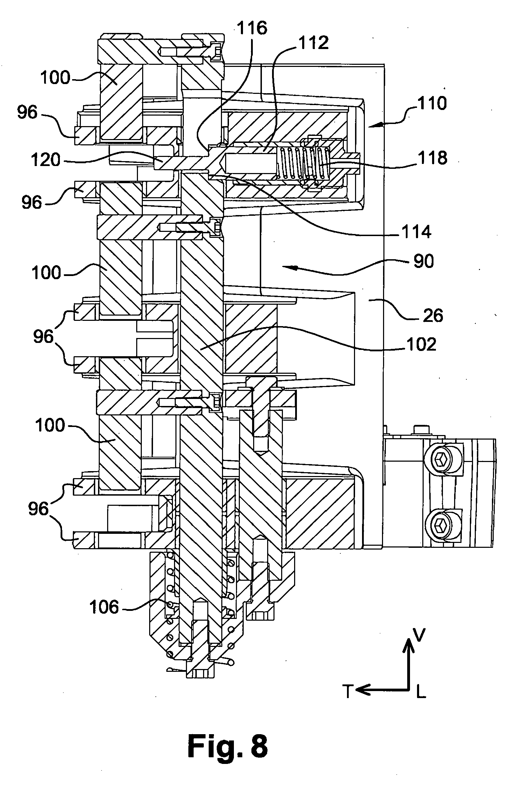

- la figure 8 est une vue en coupe similaire à la figure 7 qui représente le dispositif de verrouillage d'une unité de moulage et illustrant le dispositif de verrouillage en position déverrouillée et le mécanisme de blocage associé en position active ;

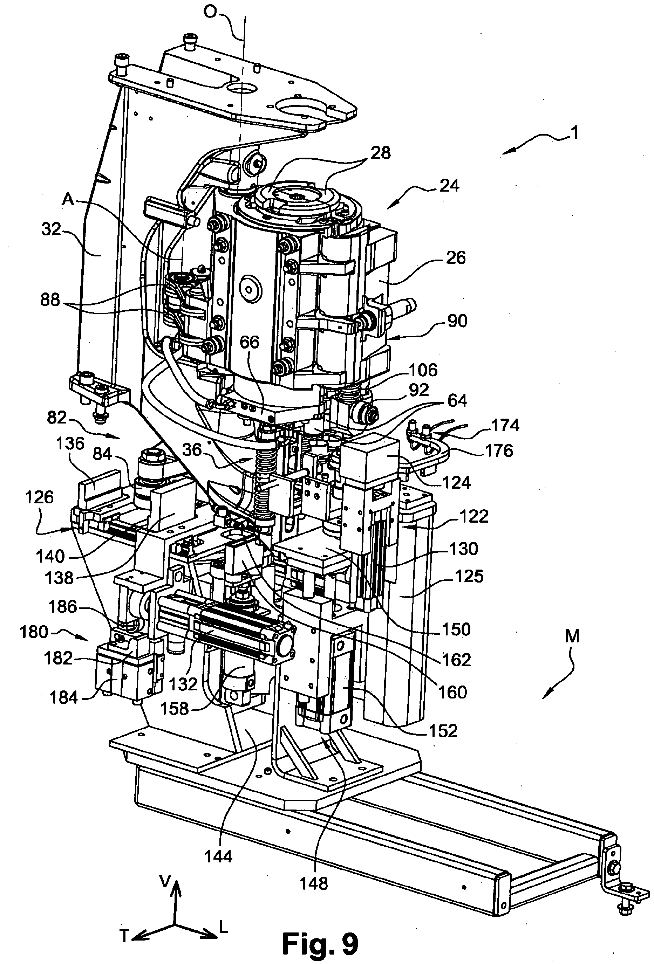

- la figure 9 est une vue en perspective qui représente une unité de moulage selon les figures 1 à 4 et un mode de réalisation préféré du module de commande selon l'invention, et qui illustre une unité de moulage en position de référence déterminée par rapport au module, ledit module étant à l'état de veille ;

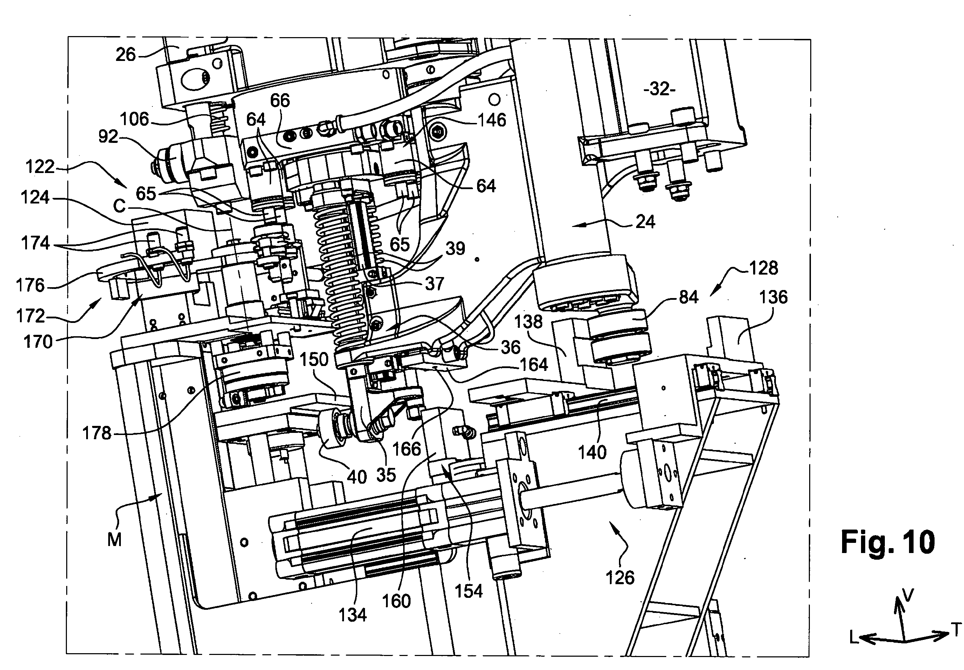

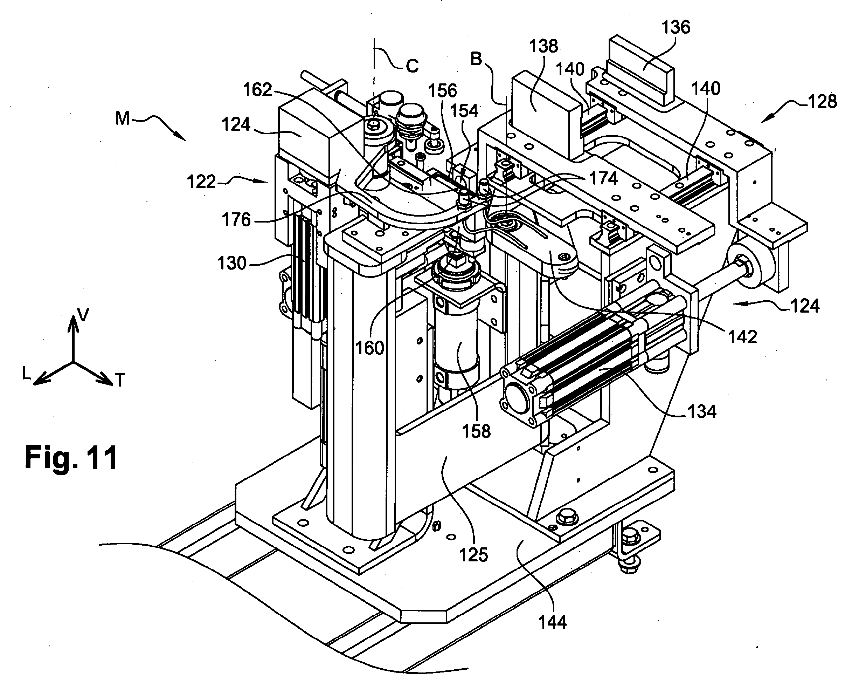

- les figures 10 et 11 sont des vues en perspective de trois-quarts illustrant partiellement l'unité de moulage et le module pour l'une et le module de commande seul pour l'autre.

Dans la suite de la description, on adoptera à titre non limitatif les orientations longitudinale, verticale et transversale en référence au trièdre (L, V, T) représenté sur les figures.

Par convention, les directions longitudinale et transversale sont déterminées de manière fixe par rapport à l'axe des porte-moules de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" ou "haute" et "basse" en référence à l'orientation verticale et enfin "gauche" ou "droite" en référence à l'orientation transversale.

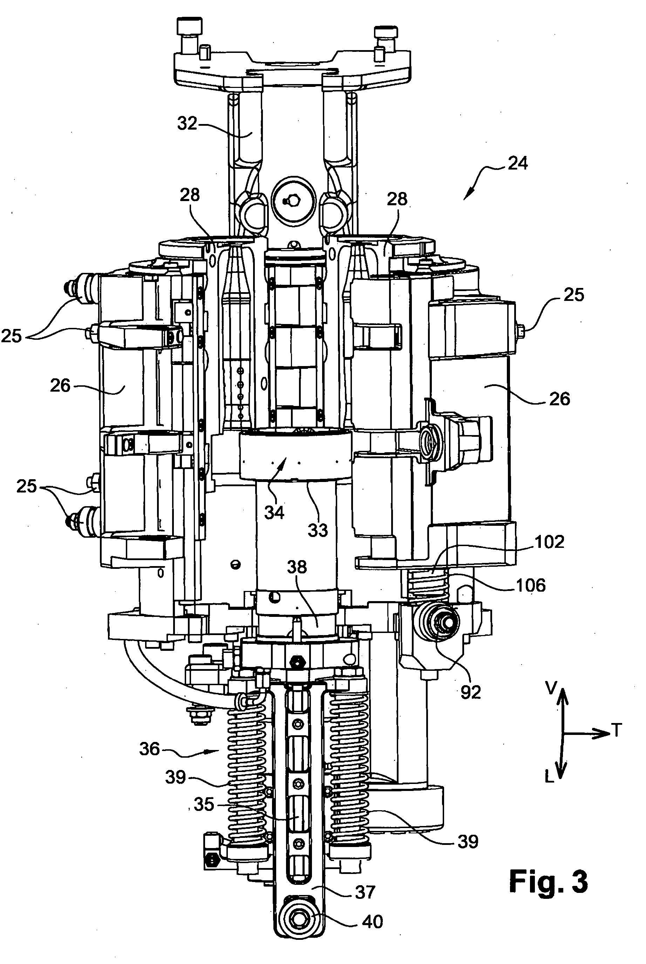

On a représenté aux figures 2 et 3, un exemple de réalisation d'une unité 24 de moulage susceptible d'être montée sur un carrousel 22 d'une machine 10 de fabrication de récipients du type de celle représentée à la figure 1 et décrite en préambule en relation avec les modes de fonctionnement de la machine 10.

L'unité 24 de moulage qui va être décrite ne constitue cependant qu'un exemple de réalisation donné à titre non limitatif.

Une telle unité 24 de moulage constitue l'un des postes de formage par soufflage ou par étirage-soufflage de la machine 10 qui comporte une série de "n" unités 24 de moulage, réparties angulairement de manière régulière, avec un pas déterminé, autour du carrousel 22 de la machine 10.

Le formage du récipient à partir d'une préforme est obtenu au moyen d'au moins un fluide sous-pression. Dans l'exemple de réalisation, le formage est de préférence réalisé par soufflage ou par étirage-soufflage en utilisant de l'air sous pression.

On se reportera par exemple au document FR-2.764.544 pour plus de détails sur des moyens de soufflage, encore appelés "tuyère de soufflage", aptes à être associés à une unité 24 de moulage.

Tel que représenté sur la figure 1, les machines, dites rotatives, sont équipées d'unités 24 de moulage présentant des caractéristiques spécifiques, en particulier chaque unité 24 de moulage comporte des porte-moules 26 qui sont généralement montés mobiles autour d'un axe de rotation (et non en translation comme dans les machines "linéaires").

L'unité 24 de moulage comporte deux porte-moules 26 qui sont montés mobiles l'un par rapport à l'autre entre une position ouverte et une position fermée de l'unité de moulage.

L'unité 24 de moulage est supportée par une console 32 destinée à être rapportée à fixation sur le carrousel 22 de la machine 10. Plus précisément, les porte-moules 26 sont constitués sous la forme de deux structures porteuses montées pivotantes autour de l'axe O de rotation, l'axe O de rotation s'étendant ici verticalement selon le trièdre (L, V, T).

Ainsi, les porte-moules 26 de l'unité 24 de moulage sont montés mobiles autour d'un axe O de rotation d'orientation verticale de manière que l'unité 24 de moulage s'ouvre vers l'extérieur du carrousel 22 de la machine pour permettre l'introduction d'une préforme 14 ou l'extraction du récipient 14' en mode de fonctionnement, dit de production.

En raison de cette cinématique, une unité 24 de moulage de ce type est appelée "en portefeuille" (ou encore *"book-like opening"* en anglais).

En variante, l'un seulement des porte-moules 26 est monté mobile tandis que l'autre porte-moule 26 est fixe, le porte-moule 26 mobile étant commandé en déplacement entre lesdites positions ouverte ou fermée.

Comme on peut le voir sur la figure 3 illustrant l'unité 24 de moulage en position ouverte, l'unité 24 de moulage comporte un moule comportant au moins deux éléments 28 de moulage munis chacun d'une demi-empreinte (visible sur chaque demi-moule présent et en position de fixation sur le porte-moule 26).

Des spécificités caractérisent une telle unité 24 de moulage en "portefeuille" et ont une incidence directe sur le changement du moule.

Ainsi, l'accessibilité aux éléments 28 de moulage est limitée du fait du faible écartement des porte-moules 26 en position ouverte lequel est déterminé par rapport au récipient final à extraire hors du moule lors de la fabrication.

De plus, dans une machine 10, l'écartement des porte-moules 26 en position ouverte est aussi limité par l'espacement entre les unités 24 de moulage, soit pour une unité 24 de moulage donnée par chacune des unités 24 de moulage adjacentes situées en amont et en aval, deux unités 24 de moulage consécutives ne pouvant pas occuper simultanément la position ouverte sans que n'entrent en contact leurs porte-moules.

Lorsque le récipient 14' à fabriquer présente un fond de forme complexe, en particulier un fond pétaloïde, il est connu que des problèmes de démoulage sont alors susceptibles de survenir. C'est la raison pour laquelle, on prévoit alors avantageusement un fond de moule séparé des éléments de moulage.

Dans l'exemple de réalisation représenté, le moule comporte respectivement trois éléments distincts, à savoir deux éléments 28 de moulage et un fond de moule 34 comportant une empreinte du fond du récipient qui est complémentaire des demi-empreintes que comportent lesdits éléments 28 de moulage.

En variante, le moule comporte uniquement deux éléments 28 de moulage, sans un tel fond de moule.

De manière connue, le fond de moule 34 est monté sur des moyens 36 de support comportant notamment une sellette 38 formant une pièce d'interface avec le fond de moule 34 et qui comporte des moyens de verrouillage (non représentés) qui sont destinés à permettre la fixation, de manière démontable, du fond de moule 34.

Avantageusement, la sellette 38 comporte encore d'autres moyens de raccordement fluidique, tels que des raccords rapides, notamment pour assurer une fonction de refroidissement du fond de moule 34 ou encore une fonction de décollement du fond de moule 34 par projection d'un jet d'air.

La sellette 38 est montée à l'extrémité supérieure des moyens 36 de support, par exemple réalisés sous la forme d'un chariot.

Les moyens 36 de support sont respectivement montés mobiles, entre au moins une position haute et une position basse, en translation selon la direction verticale.

En mode de fonctionnement, dit de production, la position haute des moyens 36 de support correspond notamment à la position occupée par le fond de moule 34 pour le formage d'un récipient 14' tandis que la position basse correspond à la position occupée par le fond de moule 34 après le formage, lorsque le récipient 14' est extrait hors du moule.

Le fond de moule 34 est apte à être entraîné en déplacement par les moyens 36 de support associés qui occupent successivement lesdites position haute et position basse selon une séquence déterminée lors du cycle de fabrication.

En mode de fonctionnement, dit d'intervention, le fond de moule 34 et les moyens 36 de support associés sont commandés selon une autre séquence déterminée en fonction du cycle de changement de moule.

Les moyens 36 de support comportent au moins un organe 40 de commande destiné à commander sélectivement le déplacement, entre les positions haute et basse, de l'équipage mobile formé par les moyens 36 de support et la sellette 38 sur laquelle est fixée ou non ledit fond de moule 34.

De préférence, l'organe 40 de commande des moyens 36 de support est un galet solidaire d'une pièce 35 qui est montée coulissante, selon la direction verticale, par rapport à la console 32, par exemple par l'intermédiaire d'au moins une glissière 37.

De préférence, les moyens 36 de support comportent des moyens 39 de rappel élastique, tels que des ressorts, qui sont aptes à rappeler automatiquement les moyens 36 de support vers ladite position haute.

En mode de fonctionnement, dit de production, l'organe 40 de commande est destiné à coopérer avec une came (non représentée) complémentaire que comporte la machine 10, ladite came étant agencée pour commander sélectivement le déplacement des moyens 36 de support du fond de moule 34 de la position haute vers la position basse, en particulier lors du démoulage, c'est à dire l'extraction du récipient 14'.

De préférence, les moyens de verrouillage (non représentés) du fond de moule 34 et de la sellette 38 sont constitués par des moyens de verrouillage commandés dans lesquels les moyens de verrouillage sont du type "à billes".

Le fond de moule 34 comporte par exemple une queue de verrouillage qui, s'étendant verticalement en dessous et dans une direction opposée à l'empreinte pétaloïde du fond, est destinée à être reçue dans un logement central complémentaire de la sellette 38.

Avantageusement, la queue de verrouillage comporte au moins un cran, formant un élément femelle, apte à recevoir les billes, formant un élément mâle, des moyens de verrouillage lorsque le fond de moule 34 et la sellette 38 sont assemblés.

Les moyens de verrouillage du fond de moule 34 avec la sellette 38 sont montées mobiles respectivement entre au moins :
- une position de verrouillage dans laquelle les billes pénètrent dans le cran de la queue de verrouillage de manière à immobiliser le fond de moule 34 par rapport à la sellette 38 ; et
- une position de déverrouillage dans laquelle les billes sont libres de manière à autoriser la séparation du fond de moule 34 et de la sellette 38.

De préférence, les moyens de verrouillage à billes sont commandés sélectivement en déplacement entre lesdites positions de verrouillage et de déverrouillage par un organe d'actionnement réalisé par exemple sous la forme d'un piston apte à être mû par un fluide, tel que de l'air sous pression, reçu dans une chambre de commande associée des moyens de verrouillage.

Le piston formant l'organe d'actionnement est monté mobile dans un cylindre et délimite avec le cylindre ladite chambre de commande.

Le piston est monté mobile entre au moins une position de blocage correspondant à la position de verrouillage des billes et une position de libération correspondant à la position de déverrouillage.

De préférence, le piston est monté mobile à l'encontre de moyens de rappel élastique destinés à rappeler automatiquement le piston vers sa position de blocage et par conséquent les billes vers la position de verrouillage.

En effet, le piston coopère avantageusement avec les billes en position de blocage de manière à bloquer en position les billes engagées dans le cran annulaire de la queue de verrouillage, grâce à quoi les billes sont immobilisées selon une direction qui est orthogonale à la direction verticale suivant laquelle s'effectue la séparation et tout déverrouillage accidentel impossible.

Grâce au rappel automatique du piston vers la position de blocage, les moyens de verrouillage sont avantageusement commandés uniquement pour obtenir le déverrouillage.

Pour ce faire, de l'air sous pression est introduit dans la chambre de commande étanche pour provoquer, à l'encontre des moyens de rappel élastique, le déplacement du piston de la position de blocage vers la position de libération dans laquelle le piston demeure tant que l'effort exercé sur le piston par l'air sous pression contenu dans la chambre est supérieur à l'effort de rappel, de sens opposé, exercé sur le piston par les moyens de rappel élastique.

Le piston occupant alors la position de libération, les billes des moyens de verrouillage sont libres d'être déplacées de la position de verrouillage vers la position de déverrouillage.

De préférence, le déplacement des billes de la position de verrouillage vers la position de déverrouillage est provoqué par coopération de formes avec une partie de la queue de verrouillage lorsque ladite queue est déplacée verticalement dans le logement complémentaire de la sellette 38.

Ainsi, l'introduction dans ou l'extraction hors du logement de la sellette 38 de la queue de verrouillage qui est solidaire du fond de moule 34 n'est possible que si le piston occupe sa position de libération car les billes sont alors seulement libres de se déplacer vers la position de déverrouillage.

Par conséquent, la chambre de commande des moyens de verrouillage doit être alimentée en air pour établir une pression supérieure à l'effort de rappel de manière à maintenir le piston en position de libération, grâce à quoi il est alors possible de réaliser la séparation ou l'assemblage du fond de moule 34 et de la sellette 38 qui est liée en déplacement aux moyens 36 de support.

Bien entendu, tant les moyens de verrouillage à billes qui viennent d'être décrits que les moyens de commande associés ne constituent qu'un exemple non limitatif pour réaliser la fonction de verrouillage entre le fond de moule 34 et la sellette 38 solidaire des moyens 36 de support mobiles.

De plus, indépendamment du point de savoir si le moule est réalisé en deux ou trois éléments avec un fond de moule 34 comme dans le présent exemple de réalisation, la conception des deux éléments 28 de moulage peut également différer, notamment selon que l'élément de moulage intègre ou non, outre le fait de comprendre une partie de l'empreinte du récipient, d'autres fonctions comme le refroidissement du moule.

Les documents FR-2.659.265 ou FR-2.843.714 illustrent des exemples de réalisation d'une unité 24 de moulage en portefeuille comportant un moule constitué par au moins deux éléments 28 de moulage (ou demi-moules) qui, respectivement muni d'une demi-empreinte de moulage, sont fixés de manière démontable à deux porte-moules 26 associés par l'intermédiaire de moyens de fixation.

Dans le document FR-2.659.265, les moyens de fixation associés formés par des vis sont aptes à être manoeuvrés entre au moins deux positions correspondant respectivement à un état de fixation et un état de libération des éléments de moulage et cela manuellement par au moins un opérateur utilisant pour ce faire un outil approprié (tournevis, clés 6 pans, etc.).

Le document WO-96/33059 illustre un autre exemple de réalisation d'une unité de moulage en portefeuille comportant différents perfectionnements.

Par comparaison avec celle du document FR-2.659.265 précité, la structure du moule de l'unité 24 de moulage diffère notamment en ce que chaque élément de moulage (ou demi-moule) est divisé en deux parties distinctes, à savoir et selon la terminologie de ce document, d'une part un porte-coquille intégrant en outre des moyens de refroidissement et, d'autre part, une coquille comportant une demi-empreinte de moulage du récipient.

De telles coquilles sont plus aisément manipulées à bras d'homme par un opérateur en raison de leur moindre poids, ne nécessitent pas de déconnection des raccords fluidiques liés à la fonction de refroidissement et permettent d'optimiser le choix des matériaux pour chacune des parties selon la fonction assurée, par exemple de l'aluminium pour les coquilles.

Dans l'exemple de réalisation de l'unité 24 de moulage représentée aux figures 2 à 4, le moule de l'unité 24 de moulage est structurellement d'une conception similaire à celle décrite dans ce document WO-96/33059.

Chaque élément 28 de moulage du moule comporte donc respectivement une coquille et un porte-coquille associé suivant les enseignements de ce document auquel on se reportera pour de plus amples détails.

Comme dans ce document, chacun des porte-coquilles est apte à être fixé de manière démontable à un porte-moule 26 associé grâce à des premiers moyens 25 de fixation, tels que des vis et/ou des goujons, tandis que la coquille est apte à être fixée de manière démontable au porte-coquille par l'intermédiaire d'autres moyens 42 de fixation, dits rapides, qui sont distincts des moyens 25 de fixation intervenant entre le porte-moule et le porte-coquille.

Par conséquent, le terme "élément 28 de moulage" est utilisé dans la présente description de manière générique et englobe notamment les différentes variantes de réalisation d'un moule et en particulier celles décrites ci-avant selon lesquelles chaque élément 28 de moulage comportant la demi-empreinte est soit un demi-moule, soit constitué d'une coquille et d'un porte coquille.

Dans l'exemple de réalisation de l'unité 24 de moulage, représenté aux figures 2 à 4, l'élément 28 de moulage est avantageusement réalisé en deux parties sous la forme d'une coquille et d'un porte coquille associé, toutefois les moyens 42 de fixation sont différents des moyens de fixation des coquilles décrits et représentés dans le document WO-96/33059.

En effet, les moyens de fixation du document WO-96/33059 nécessitent, d'une part, l'intervention manuelle d'un opérateur et, d'autre part, que l'unité de moulage occupe la position ouverte pour lui en autoriser l'accès.

Les porte-coquilles sont respectivement fixés de manière démontable aux porte-moules 26, par exemple par des moyens 25 de fixation tels que des vis, mais demeurent avantageusement fixés aux porte-moules 26, seules les coquilles comportant la demi-empreinte étant changées lors d'un changement de moule.

Dans le but de réduire encore, le temps nécessaire pour libérer et fixer chaque élément 28 de moulage lors d'un changement de moule, c'est-à-dire ici la coquille par rapport au porte-coquille, la Demanderesse a inventé de nouveaux moyens 42 de fixation des éléments de moulage.

Avantageusement, les moyens 42 de fixation des éléments 28 de moulage sont réalisés conformément aux enseignements de la demande de brevet PCT/EP2010/063051 déposée le 06 septembre 2010 au nom de la Demanderesse.

La demande de brevet PCT/EP2010/063051 ne constitue toutefois qu'un exemple de réalisation préféré de tels moyens 42 de fixation, selon une conception de type mécanique.

En variante, les moyens de fixation associés aux éléments 28 de moulage sont réalisés conformément aux enseignements de la demande de brevet français N°0956074 déposée le 07 septembre 2009 au nom de la Demanderesse qui décrit des moyens de fixation par attraction qui sont formés par des moyens commandés d'aspiration aptes à provoquer un effet ventouse propre à fixer chaque élément 28 de moulage, reçu dans un logement complémentaire, au porte-moule 26.

De préférence, l'unité 24 de moulage comporte des moyens 42 de fixation de chaque élément 28 de moulage au porte-moule 26 associé qui sont réalisés conformément aux enseignements de la demande de brevet PCT/EP2010/063051.

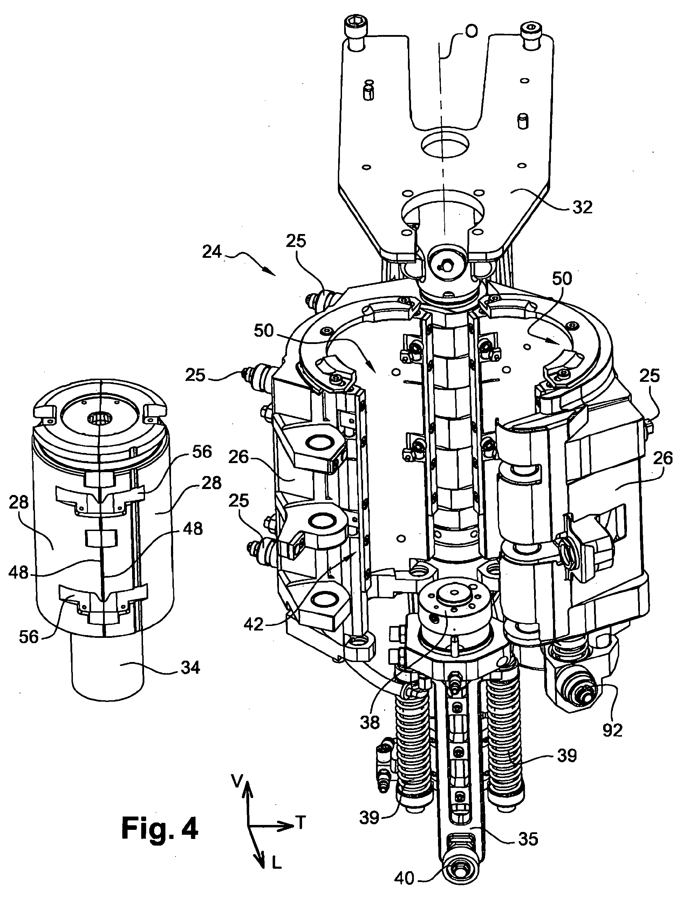

Les moyens 42 de fixation sont aptes à fixer de manière démontable chaque élément 28 de moulage (ici une coquille) au porte-moule 26 associé (ici un porte-coquille fixé au porte-moule) et sont visibles sur la figure 4 illustrant une unité 24 de moulage en position ouverte et dont le moule a été démonté.

Les moyens 42 de fixation selon un exemple de réalisation préféré sont représentés en détails aux figures 5 et 6.

Les avantages conférés par des moyens 42 de fixation réalisés conformément aux enseignements de la demande de brevet PCT/EP2010/063051 sont indépendants de la structure du moule, en effet lesdits moyens de fixation sont susceptibles d'être utilisés indifféremment pour la fixation d'une coquille à un porte-coquille comme d'un demi-moule à un porte-moule.

Dans l'exemple de réalisation représenté aux figures 2 à 4, les moyens 42 de fixation de chaque élément 28 de moulage au porte-moule 26 correspondent donc respectivement à une coquille fixée de manière démontable par lesdits moyens 42 de fixation à un porte-coquille associé, lequel porte-coquille est fixé de manière démontable à un porte-moule 26 associé, ici par des vis et des goujons 25.

Au même titre que le terme "élément 28 de moulage" est utilisé dans la présente description de manière générique, on utilisera ci-après également par simplification le terme "porte-moule" de manière générique dès lors que les avantages des moyens 42 de fixation qui vont être décrits sont indépendants de la conception structurelle de l'unité 24 de moulage.

Ainsi, le terme "porte-moule" doit être compris comme désignant indifféremment, d'une part, un porte-moule associé à un demi-moule formant l'élément 28 de moulage, soit le cas d'une unité 24 de moulage de conception similaire par exemple à celle du document FR-2.659.265 et, d'autre part, un sous-ensemble formé d'un porte-moule sur lequel est fixé un porte-coquille dès lors que la coquille constitue l'élément 28 de moulage qui est démonté et changé, soit le cas du présent exemple de réalisation et du document précité WO-96/33059.

Les moyens 42 de fixation sont susceptibles d'occuper sélectivement au moins un état de fixation et un état de libération, et, réalisés selon la demande PCT/EP2010/063051, les moyens 42 de fixation sont montés mobiles entre au moins une position de fixation et une position de libération.

Selon une caractéristique importante, les moyens 42 de fixation sont aptes à être commandés sélectivement entres lesdites positions de fixation et de libération lorsque l'unité 24 de moulage est en position fermée.

Pour de plus amples détails sur les différents modes de réalisation comme les avantages de tels moyens 42 de fixation, on se reportera à la demande internationale PCT/EP2010/063051.

Les moyens 42 de fixation comportent au moins un organe d'actionnement 44 qui est apte à coulisser pour commander en déplacement les moyens 42 de fixation entre lesdites positions de fixation et de libération.

L'organe d'actionnement 44 des moyens 42 de fixation est apte à être commandé depuis l'extérieur de l'unité 24 de moulage pour provoquer la libération ou la fixation de chaque élément 28 de moulage par rapport au porte-moule 26 et cela quelle que soit la position ouverte ou fermée de l'unité 24 de moulage.

De préférence, les moyens 42 de fixation sont au moins en partie intégrés à l'intérieur de chacun des bords 46 du porte-moule 26 (ici du porte-coquille) de l'unité 24 de moulage et avantageusement aptes à fixer l'élément 28 de moulage sur l'un et l'autre de ses bords 48 d'orientation verticale qui, de part et d'autre de la demi-empreinte, sont respectivement parallèles à l'axe O de rotation.

Ainsi, chaque élément 28 de moulage comporte des moyens 42 de fixation sur chacun de ses bords 48 par l'intermédiaire desquels ledit élément 28 est fixé dans un logement 50 du porte-moule 26 (ici du porte-coquille).

Les moyens 42 de fixation comportent respectivement au moins un élément de fixation qui est solidaire de chaque élément 28 de moulage et au moins un autre élément de fixation qui, complémentaire dudit élément, est apte à être déplacé par l'organe 44 d'actionnement.

Avantageusement, l'organe 44 d'actionnement comporte une partie 52 de commande qui est apte à être actionnée depuis l'extérieur de l'unité 24 de moulage occupant la position fermée.

De préférence, ledit au moins un élément de fixation solidaire de chaque élément 28 de moulage est un élément 56 de fixation de type femelle, tel qu'un cran, et ledit au moins un autre élément de fixation lié à l'organe 44 d'actionnement est un élément 54 de fixation de type mâle, tel qu'un ergot.

De tels moyens 42 de fixation correspondent plus particulièrement au troisième mode de réalisation décrit dans la demande internationale PCT/EP2010/063051.

En variante, les moyens 42 de fixation sont par exemple réalisés selon le premier mode de réalisation de la demande dans lequel les éléments de fixation 54 et 56 sont inversés, l'organe 44 d'actionnement comportant des crochets, formant un élément de fixation de type femelle, tandis que l'élément de moulage (la coquille) comporte des pions, formant un élément de fixation de type mâle.

De préférence, chaque organe 44 d'actionnement comporte au moins deux éléments 54 de fixation dont l'un est relié audit organe 44 avec interposition d'un organe élastique 58 pour former une liaison à jeu apte à garantir le bon positionnement de chaque élément 54 avec l'autre élément 54.

Un organe 44 d'actionnement est porté par chacun des deux bords 46 de chaque porte-moule 26 (ici le porte-coquille) dans un logement 60 duquel l'organe 44 d'actionnement est monté coulissant, ici selon la direction verticale.

Le logement 60 est ouvert transversalement et fermé par un élément de fermeture amovible, tel qu'une plaque 62 qui est rapportée à fixation sur le bord 46, par exemple par vissage, pour permettre notamment tant le montage que le maintien en place de l'organe 44 d'actionnement.

L'organe 44 d'actionnement est apte à être commandé sélectivement en déplacement entre lesdites positions de fixation et de libération grâce à un dispositif d'actionnement.

Avantageusement, chaque organe 44 d'actionnement des moyens 42 de fixation dispose de son propre dispositif d'actionnement associé qui est constitué par un actionneur 64.

De préférence, l'actionneur 64 est un vérin pneumatique, en variante un vérin hydraulique ou un moteur électrique.

Dans l'exemple de réalisation, chaque actionneur 64 est monté en permanence sur une face inférieure d'une console 66 réalisée en deux parties respectivement liées aux porte-moules 26 de sorte que lesdits actionneurs 64 sont embarqués sur l'unité 24 de moulage.

Chaque actionneur 64 est apte à être commandé pour faire coulisser sélectivement l'organe 44 d'actionnement qui lui est associé entre les positions de fixation et de libération.

Avantageusement, les actionneurs 64 sont commandés simultanément pour libérer ou fixer lesdits éléments 28 de moulage et cela alors que l'unité 24 de moulage est en position fermée.

De préférence, l'organe 44 d'actionnement des moyens 42 de fixation porte les premiers éléments 54 de fixation constitués par des éléments de type mâle tandis que les seconds éléments 56 de fixation, complémentaires des premiers éléments 54, sont portés par l'élément 28 de moulage.

De préférence, l'organe 44 d'actionnement comporte un organe élastique 68 de rappel apte à rappeler automatiquement l'organe 44 d'actionnement, auquel sont liés les premiers éléments 54 de fixation, vers la position de fixation dans laquelle chaque premier élément 54 coopère avec un deuxième élément 56 pour assurer la fixation de l'élément 28 de moulage.

La fonction de verrouillage en position de l'organe 44 d'actionnement est susceptible d'être assurée par l'actionneur 64.

Avantageusement, un actionneur 64 de type vérin pneumatique simple effet est apte à assurer le verrouillage de l'organe 44 d'actionnement en position de libération, l'actionneur 64 exerçant sur la partie de commande 52 de l'organe 44 d'actionnement un effort supérieur à l'effort du ressort formant l'organe de rappel élastique 68.

De préférence, chaque organe 44 d'actionnement comporte au moins deux premiers éléments 54 de fixation de type mâle et des moyens de rattrapage de jeu, tel qu'un ressort 58, sont prévus entre l'un des éléments 54 et l'organe 44 d'actionnement.

La figure 6 représente une vue de détail des moyens 42 de fixation précédemment illustrés à la figure 5, les moyens 42 de fixation étant représentés en position de fixation et alors que l'unité 24 de moulage est en position fermée.

Le premier élément 54 de fixation, ici supérieur, porté par l'organe 44 d'actionnement présente globalement une forme parallélépipédique.

De préférence, le premier élément 54 comporte principalement un ergot 70 de verrouillage et deux faces latérales 72 de blocage. L'ergot 70 de verrouillage présente un profil curviligne, globalement en "V" qui est reçu dans un logement 74 complémentaire du cran formant le second élément 56 de fixation réalisé dans l'élément 28 de moulage.

Le cran 56 comporte encore une face horizontale 76 globalement plane que parcourt l'ergot 70 de verrouillage lorsque le premier élément 54 de fixation est déplacé avec l'organe 44 d'actionnement mû par l'actionneur 64 entre les positions de fixation et de libération, correspondant à l'introduction de l'ergot 54 dans le cran 56 ou son extraction hors du cran 56.

Lorsque le premier élément 54 coopère avec le second élément des moyens 42 de fixation pour maintenir en position l'élément 28 de moulage, l'élément 28 de moulage qui s'oppose aux efforts appliqués par les moyens 42 de fixation exerce sur ces derniers, et tout particulièrement sur l'organe 44 d'actionnement par l'intermédiaire des premiers éléments 54 qui lui sont liés, des efforts qui tendent à provoquer un mouvement de rotation et par conséquent des contraintes en torsion.

Avantageusement, des moyens de blocage en rotation sont prévus pour bloquer en rotation l'organe 44 d'actionnement afin de s'opposer auxdits efforts de torsion sollicitant l'organe 44 d'actionnement.

De préférence, les moyens 42 de fixation comportent des moyens de blocage en rotation aptes à bloquer les premiers éléments 54 de fixation portés par l'organe 44 d'actionnement et solidaires en rotation de celui-ci pour neutraliser lesdits efforts de torsion qui, à défaut, s'appliqueraient sur l'organe 44 d'actionnement.

De préférence, les moyens de blocage en rotation de l'organe 44 d'actionnement sont constitués par les faces verticales 72 opposées de chaque premier élément 54 qui, en position de fixation, coopèrent respectivement avec une face d'appui 78 du bord 46 adjacent au logement 60 et avec une portion d'une face 80 de l'élément formé par la plaque 62.

Avantageusement, une partie 72 des moyens de blocage en rotation de l'organe 44 d'actionnement est liée en déplacement audit organe 44 et est apte à coopérer avec une autre partie 78, 80 solidaire du porte-moule 26.

Par comparaison avec les moyens de fixation décrits dans le document WO-96/33059, les moyens 42 de fixation qui viennent d'être décrits permettent notamment d'automatiser la commande entre les positions de fixation et de libération en utilisant des actionneurs 64 associés aux organes 44 d'actionnement des moyens 42 de fixation.

Avantageusement, les moyens 42 de fixation permettent de libérer (ou de fixer) les éléments 28 de moulage alors que l'unité 24 de moulage est en position fermée grâce à quoi un moule uni tel que représenté sur la figure 4 est susceptible d'être d'extrait sous la forme d'un sous-ensemble unitaire transportable, en particulier par des moyens de préhension avantageusement aptes à être déplacés par un bras robotisé, tel que décrit dans la demande internationale PCT/EP2010/063051.

L'unité 24 de moulage comporte un dispositif 82 d'ouverture et de fermeture de l'unité 24 de moulage comportant au moins un organe 84 de commande apte à déplacer au moins l'un des porte-moules 26 entre lesdites positions ouverte et fermée.

Chaque porte-moule 26 comporte des moyens 86 d'articulation formant une charnière qui sont agencés, selon la direction longitudinale, à l'arrière de l'unité 24 de moulage et détermine l'axe O de rotation autour duquel les porte-moules 26 pivotent entre les positions ouverte et fermée.

Pour en commander le déplacement, le dispositif 82 d'ouverture/fermeture comporte des biellettes 88, respectivement ici une paire de biellettes 88 associées à chacun des porte-moules 26. Une première extrémité des biellettes 88 est liée à l'un ou l'autre des porte-moules 26 associés tandis que l'autre extrémité de l'ensemble des biellettes 88 est reliée à un axe A commun d'articulation.

Selon que l'axe A commun d'articulation est déplacé selon la direction longitudinale de l'arrière vers l'avant pour le rapprocher de l'axe O de rotation ou au contraire de l'avant vers l'arrière pour l'éloigner, on provoque l'éloignement des porte-moules 26 l'un de l'autre soit l'ouverture de l'unité 24 de moulage ou au contraire le rapprochement l'un de l'autre des porte-moules 26 soit la fermeture de l'unité 24 de moulage.

Les porte-moules 26 sont ainsi susceptibles de s'écarter mutuellement l'un de l'autre en pivotant respectivement autour de l'axe O de rotation, entre au moins une position fermée et une position ouverte.

Pour commander ce mouvement de l'axe A commun d'articulation, on utilise des moyens d'actionnement aptes à agir sur l'organe 84 de commande, tel qu'au moins un galet.

En mode de fonctionnement, dit de production, les moyens d'actionnement sont par exemple constitués par au moins une came destinée à coopérer avec le galet formant l'organe 84 de commande pour commander sélectivement l'ouverture et la fermeture de l'unité 24 de moulage.

De préférence, un bras 89 de commande formant un levier est interposé entre l'organe 84 de commande et l'axe A commun d'articulation pour former un amplificateur de course, une extrémité dudit bras 89 étant liée à l'axe A commun d'articulation et l'autre extrémité étant reliée à l'organe 84 de commande par l'intermédiaire d'un arbre 87.

On se reportera par exemple au document FR-2.843.714 pour de plus amples détails sur un tel dispositif 82 d'ouverture/fermeture d'une unité de moulage.

L'unité 24 de moulage comporte un dispositif 90 de verrouillage de l'unité 24 de moulage comportant au moins un organe 92 de commande apte à actionner des moyens de verrouillage de l'unité 24 de moulage.

Le dispositif 90 de verrouillage est agencé en partie avant de l'unité 24 de moulage, soit longitudinalement à l'opposé de l'axe O de rotation et du dispositif 82 d'ouverture/fermeture.

Le dispositif 90 de verrouillage est destiné à assurer le verrouillage des deux porte-moules 26 en position fermée de l'unité 24 de moulage.

Les moyens de verrouillage du dispositif 90 de verrouillage comportent par exemple deux demi-verrous respectivement de type mâle et de type femelle qui sont associés aux porte-moules 26 et aptes à coopérer mutuellement pour maintenir l'unité 24 de moulage en position fermée.

Ainsi, le dispositif 90 de verrouillage a notamment pour fonction de prévenir, en production, toute ouverture inopinée lors des opérations de transformation par formage de la préforme 14.

A titre indicatif, on rappellera pour un formage par soufflage ou par étirage-soufflage que les pressions finales de soufflage peuvent atteindre 40 bars.

Le dispositif 90 de verrouillage est plus particulièrement représenté en détails sur la coupe de la figure 7.

Les demi-verrous comportent chacun au moins une branche saillante, de préférence ici des branches 94 simples pour le demi-verrou du porte-moule 26 de gauche et des branches 96 doubles pour le demi-verrou du porte-moule 26 de droite.

Les branches 94, 96 respectives des demi-verrous sont dirigées transversalement en direction l'une de l'autre et sont mutuellement décalées verticalement de sorte que, en position fermée telle qu'illustrée par la figure 7, les branches s'interpénètrent entre elles.

Ainsi, chaque branche 94 est reçue entre les deux branches 96 qui se positionnent verticalement au dessus et en dessous.

De préférence, chaque branche 94 du demi-verrou de type femelle comporte une ouverture 98 qui, s'étendant suivant un axe vertical, traverse ladite branche 94 et chaque branche 96 du demi-verrou de type mâle supporte à coulissement selon la direction verticale un doigt 100 de verrouillage.

Le dispositif 90 de verrouillage comporte des moyens 102 d'entraînement qui sont liés en déplacement, ici en coulissement, aux doigts 100 de verrouillage formant avec les ouvertures 98 complémentaires les moyens de verrouillage montés mobiles entre une position verrouillée et une position déverrouillée.

Avantageusement, chaque doigt 100 de verrouillage est solidaire d'un bras 104 de liaison qui est lui-même solidaire en déplacement des moyens 102 d'entraînement.

Le coulissement des moyens 102 d'entraînement entre la position verrouillée (position basse) et la position déverrouillée (position haute) est commandé par l'organe 92 de commande, de préférence formé par un galet, solidaire des moyens 102 d'entraînement, tels qu'un arbre.

Ainsi, le dispositif 90 de verrouillage de l'unité 24 de moulage comporte un organe 92 de commande des moyens 98, 100 de verrouillage qui sont montés mobiles entre :
- une position verrouillée dans laquelle les porte-moules 26 de l'unité 24 de moulage sont maintenus en position fermée par lesdits moyens 98, 100 de verrouillage, et
- une position déverrouillée dans laquelle les porte-moules 26 sont libres d'être déplacés entre la position fermée et la position ouverte.

En mode de fonctionnement, dit de production, de la machine, l'organe 92 de commande constitué par le galet (en trait silhouette sur la figure 7) est destiné à coopérer avec des moyens à came complémentaires pour commander sélectivement lesdits moyens 98, 100 de verrouillage du dispositif 90 de verrouillage entre lesdites positions verrouillée et déverrouillée.

En référence à la figure 1, de tels moyens à came sont agencés dans une machine 10 au voisinage de la zone Zi d'introduction des préformes 14 et de la zone Ze d'évacuation des récipients 14' de manière à actionner le galet formant l'organe 92 de commande du dispositif 90 de verrouillage.

De manière connue, d'autres moyens à came sont également agencés dans ces mêmes zones Zi et Ze pour l'actionnement de l'organe 84 de commande du dispositif 82 d'ouverture/fermeture pour commander sélectivement l'ouverture, après l'avoir préalablement déverrouillée, puis la fermeture de l'unité 24 de moulage, dans le but de pouvoir introduire une préforme 14 ou extraire un récipient 14'.

Avantageusement, le dispositif 90 de verrouillage comporte des moyens 106 de rappel élastique qui sont aptes à rappeler automatiquement les moyens 98, 100 de verrouillage vers la position verrouillée.

De préférence, les moyens 106 sont formés par un ressort de rappel élastique qui est traversé centralement par l'arbre formant les moyens 102 d'entraînement et qui prend appui à l'une de ses extrémités sur une coupelle 107 et à l'autre extrémité sur un support 108 fixé aux moyens 102 d'entraînement et portant l'organe 92 de commande.

Pour de plus amples détails sur la structure et le fonctionnement d'un tel dispositif 90 de verrouillage., on pourra par exemple se reporter au document FR-2.646.802 qui décrit un verrou de conception globalement similaire.

Avantageusement, le dispositif 90 de verrouillage de l'unité 24 de moulage comporte un mécanisme 110 de blocage qui est associé aux moyens 98, 100 de verrouillage.

Un tel mécanisme 110 de blocage est plus particulièrement visible sur les figures 7 et 8.

Avantageusement, le mécanisme 110 comporte des moyens 112 de blocage, tels qu'un coulisseau, qui sont aptes à être commandés sélectivement entre une position inactive (figure 7), qui est associée à la position verrouillée du dispositif 90 de verrouillage, et une position active de blocage (figure 8) qui est associée à la position déverrouillée du dispositif 90 de verrouillage.

La position active de blocage correspond à la position dans laquelle lesdits moyens 112 de blocage immobilisent les moyens 98, 100 de verrouillage en position déverrouillée.

De préférence, les moyens 112 de blocage comportent une partie de blocage mâle formée par un ergot 114 qui est apte à pénétrer dans une partie femelle complémentaire des moyens 102 d'entraînement et qui est ici formée par un cran 116.

Grâce à la coopération de formes entre l'ergot 114 des moyens 112 de blocage et le cran 116 des moyens 102 d'entraînement, les moyens 102 d'entraînement sont immobilisés et ne sont alors plus susceptibles de coulisser vers la position verrouillée, en présence ou en l'absence d'application d'un effort de déverrouillage sur l'organe 92 de commande.

En l'absence du blocage par le mécanisme 110, un tel retour en position verrouillée serait automatiquement provoqué par les moyens 106 de rappel élastique.

Les moyens 112 de blocage sont ici montés mobiles en translation selon la direction transversale, c'est à dire orthogonalement à la direction verticale selon laquelle s'étendent les moyens 102 d'entraînement des moyens 98, 100 de verrouillage, entre lesdites positions inactive et active de blocage.

Avantageusement, le mécanisme 110 de blocage comporte un organe 118 de rappel élastique des moyens 112 de blocage vers la position active de blocage.

Avantageusement, les moyens 112 de blocage sont aptes à être déplacés, à l'encontre dudit organe 118 de rappel élastique, de la position active vers la position inactive par un élément de commande.

De préférence, l'élément de commande est formé par une des branches 94 qui est apte à coopérer avec un doigt 120 solidaire des moyens 112 de blocage de manière à provoquer automatiquement le déblocage du mécanisme 110 lors de la fermeture des porte-moules 26 de l'unité 24 de moulage.

Le doigt 120 s'étend en saillie transversalement au delà de la partie mâle formée par l'ergot 114 et jusqu'au logement délimité par les branches 96 dans lequel la branche 94 est destinée à être reçue en position fermée, l'extrémité de ladite branche 94 coopérant alors avec l'extrémité dudit doigt 120 de manière à provoquer le coulissement transversal des moyens 112 de blocage de la position active de blocage vers la position inactive et ceci à l'encontre de l'organe 118 de rappel élastique.

Par conséquent, dès le début de l'ouverture des porte-moules 26, lorsque la branche 94 se désengage d'entre les branches 96 et ne sollicite plus le doigt 120, les moyens 112 de blocage sont automatiquement rappelés vers la position active de blocage dans laquelle l'ergot 114 inséré dans le cran 116 assure l'immobilisation des moyens 98, 100 de verrouillage en position déverrouillée.

Bien entendu, le dispositif 90 de verrouillage décrit et représenté aux figures 7 et 8 n'est donné qu'à titre d'exemple non limitatif.

On décrira maintenant selon l'invention un mode de réalisation d'un système automatisé pour le changement de moule d'une unité 24 de moulage équipant une machine 10 de fabrication de récipients 14'.

Le système automatisé 1 selon le mode de réalisation décrit ci-après est tout particulièrement, mais non exclusivement, destiné à être utilisé pour procéder au changement de moule d'une unité 24 de moulage conforme à l'exemple de réalisation décrit précédemment en référence aux figures 2 à 8.

Le système automatisé 1 comporte au moins un module M de commande apte à automatiser toutes ou au moins une partie des opérations qui sont mises en oeuvre pour opérer un changement de moule complet d'une unité 24 de moulage.

Le module M de commande du système est susceptible d'occuper au moins :
- un état de veille associé à un mode de fonctionnement de la machine 10, dit de production, pour la fabrication de récipients par la machine, et
- un état d'utilisation associé à un autre mode de fonctionnement de la machine 10, dit d'intervention, dans lequel ledit module M est apte à commander sélectivement au moins le dispositif 90 de verrouillage et le dispositif 82 d'ouverture et de fermeture de l'unité 24 de moulage.

Le module M de commande comporte au moins un premier dispositif 122 d'actionnement qui est associé au dispositif 90 de verrouillage de l'unité 24 de moulage.

Le premier dispositif 122 d'actionnement comporte des premiers moyens 124 de manoeuvre qui, lorsque l'unité 24 de moulage occupe une position de référence déterminée par rapport audit module M, sont aptes à coopérer avec l'organe 92 de commande du dispositif 90 de verrouillage pour commander sélectivement les moyens 98, 100 de verrouillage entre lesdites positions verrouillée et déverrouillée.

La figure 9 représente une unité 24 de moulage occupant ladite position de référence déterminée par rapport au module M de commande.

Plus précisément, ladite unité 24 de moulage est amenée en position de référence en commandant l'entraînement en rotation du carrousel 22 de la machine 10 jusqu'à ce que l'unité 24 soit correctement positionnée par rapport au module M.

De préférence, le module M occupe une position fixe par rapport à la machine 10 et les unités 24 de moulage sont successivement amenées dans la position de référence en vue d'en changer le moule.

Une fois atteinte la position de référence déterminée, l'unité 24 de moulage demeure dans ladite position de référence tout au long du cycle de changement de moule et il n'y a aucun mouvement ou déplacement relatif entre l'unité 24 de moulage et le module M de commande.

Avantageusement, les premiers moyens 124 de manoeuvre sont montés mobiles par rapport au module M, entre au moins :
- une première position PV1 correspondant à la position verrouillée des moyens 98, 100 de verrouillage du dispositif 90 de verrouillage de l'unité 24 de moulage ; et
- une deuxième position PV2 correspondant à la position déverrouillée des moyens 98, 100 de verrouillage du dispositif 90 de verrouillage de l'unité 24 de moulage.

Le module M de commande comporte au moins un deuxième dispositif 126 d'actionnement qui est associé dispositif 82 d'ouverture et de fermeture de l'unité 24 de moulage.

Le module M de commande comporte des deuxièmes moyens 128 de manoeuvre qui sont distincts des premiers moyens 124 de manoeuvre du premier dispositif 122 d'actionnement.

Lorsque l'unité 24 de moulage occupe ladite position de référence déterminée par rapport audit module M, les deuxièmes moyens 128 de manoeuvre sont aptes à coopérer avec l'organe 84 de commande du dispositif 82 d'ouverture/fermeture pour commander sélectivement l'ouverture et la fermeture de l'unité 24 de moulage.

Avantageusement, les deuxièmes moyens 128 de manoeuvre sont montés mobiles, par rapport au module M, entre au moins :
- une première position PL1 correspondant à la position fermée de l'unité 24 de moulage ; et
- une deuxième position PL2 correspondant à la position ouverte de l'unité 24 de moulage.

Grâce à un tel module M de commande, le système est apte à automatiser au moins l'actionnement des organes de commande 92 et 84 desdits dispositifs 90 et 82 lors du cycle de changement de moule d'une unité 24 de moulage.

Le premier dispositif 122 d'actionnement comporte au moins un premier actionneur 130 pour déplacer sélectivement, entre au moins la première position PV1 et la deuxième position PV2, un premier organe 124 de manoeuvre formant lesdits premiers moyens de manoeuvre.

Le premier organe 124 de manoeuvre est monté mobile en translation, selon la direction verticale soit du bas vers le haut et réciproquement, et est entraîné en déplacement par le premier actionneur 130 qui est avantageusement piloté par une unité de contrôle (non représentée) du module M de commande.

Le deuxième dispositif 126 d'actionnement comporte au moins un actionneur 132 principal pour déplacer sélectivement entre au moins la première position PL1 et la deuxième position PL2, un deuxième organe 128 de manoeuvre formant lesdits deuxièmes moyens de manoeuvre.

Le deuxième organe 128 de manoeuvre est monté mobile en translation, selon la direction longitudinale soit d'avant vers l'arrière et réciproquement, et est entraîné en déplacement par l'actionneur 132 principal qui est piloté par l'unité de contrôle (non représentée) du module M de commande.

De préférence, les deuxièmes moyens 128 de manoeuvre de l'organe 84 de commande du dispositif 82 d'ouverture et de fermeture sont constitués par une pince 128 commandée comportant deux mors 136 et 138 dont au moins l'un 136 desdits mors est monté mobile, par rapport à l'autre mors 138.

Avantageusement, au moins l'un 136 desdits mors 136 et 138 est monté mobile entre :
- une position de repos de la pince 128 dans laquelle les mors 136 et 138 sont écartés l'un de l'autre, et
- une position de travail de la pince 128 dans laquelle lesdits mors 136 et 138 sont rapprochés pour coopérer avec ledit deuxième organe 84 de commande.

Avantageusement, le deuxième dispositif 126 d'actionnement du module M comporte au moins un actionneur 134 secondaire pour déplacer sélectivement ledit au moins un mors 136 mobile entre lesdites positions de repos et de travail de la pince 128.

Le mors 136 mobile de la pince 128 est déplacé sélectivement par l'actionneur 134 secondaire qui lui est associé afin de le rapprocher ou l'éloigner de l'autre mors 138 pour que lesdits mors 136 et 138 occupent respectivement lesdites positions de travail ou de repos de la pince 128.

En position de repos de la pince 128, les mors 136 et 138 sont écartés d'une distance donnée qui est supérieure aux dimensions du galet formant l'organe 84 de commande du dispositif 82 d'ouverture/fermeture de l'unité 24 de moulage, grâce à quoi lorsque l'unité 24 de moulage est notamment amenée en position de référence déterminée à l'aplomb du module M de commande aucune interférence ne se produit entre ledit organe 84 de commande et la pince 128.

En position de travail de la pince 128, les mors 136 et 138 sont entraînés ensemble en déplacement par l'actionneur 132 principal entre lesdites première et deuxième positions PL1, PL2 et entraîne alors ledit organe 84 de commande positionné entre les mors 136 et 138 de la pince 128 en position de travail.

De préférence, les mors 136 et 138 sont montés mobiles en translation, selon la direction longitudinale, sur des moyens 140 de guidage, tels que deux glissières parallèles.

Les premiers moyens 124 de manoeuvre représentés sur les figures 9 et suivantes ne constituent qu'un exemple de réalisation d'organe de manoeuvre.

En effet, le dispositif 90 de verrouillage de l'unité 24 de moulage comportant des moyens 106 de rappel élastique des moyens 98, 100 de verrouillage vers la position verrouillée, l'organe 124 de manoeuvre a pour fonction de coopérer avec l'organe 92 de commande pour provoquer le déverrouillage des moyens 98, 100 de verrouillage dès lors que le verrouillage est obtenu automatiquement du fait de la présence desdits moyens 106 de rappel élastique.

L'organe 124 de manoeuvre est déplacé par le premier actionneur 130, verticalement vers le haut, suivant une course de déverrouillage correspondant à la translation de la première position PV1 vers la deuxième position PV2, deuxième position PV2 dans laquelle l'organe 124 de manoeuvre sollicite l'organe 92 de commande à l'encontre des moyens 106 de rappel élastique, avec un effort de poussée.

En variante, selon la conception du dispositif 90 de verrouillage, le déverrouillage est obtenu par l'organe 124 de manoeuvre en appliquant sur l'organe 92 de commande un effort de traction.

En effet, il existe également des dispositifs 90 de verrouillage dans lesquels le déverrouillage est obtenu en exerçant un effort de traction, par exemple du haut vers le bas selon la direction verticale.

En l'absence de moyens 106 de rappel élastique vers l'une ou l'autre des positions verrouillée et déverrouillée des moyens 98, 100 de verrouillage du dispositif 90 de verrouillage, les premiers moyens 124 de manoeuvre sont aptes à coopérer avec l'organe 92 de commande pour provoquer le déverrouillage et le verrouillage.

Avantageusement, le dispositif 90 de verrouillage comporte un mécanisme 110 de blocage apte à bloquer les moyens 98, 100 de verrouillage en position déverrouillée, en particulier lorsque ledit dispositif 90 de verrouillage comporte également des moyens 106 de rappel élastique desdits moyens 98, 100 de verrouillage vers la position verrouillée.

Tel que décrit précédemment, dès le début de l'ouverture des porte-moules 26, lorsque la branche 94 se désengage d'entre les branches 96 et ne sollicite plus le doigt 120, les moyens 112 de blocage sont automatiquement rappelés vers la position active de blocage dans laquelle l'ergot 114 inséré dans le cran 116 assure l'immobilisation des moyens 98, 100 de verrouillage en position déverrouillée.

L'organe 124 de manoeuvre du premier dispositif 122 d'actionnement ayant provoqué le déverrouillage, l'ouverture des porte-moules 26 est ensuite commandée par le deuxième dispositif 126 d'actionnement et, dès qu'un écartement suffisant entre les porte-moules 26 est atteint, provoque le rappel automatique des moyens 112 de blocage vers la position active de blocage des moyens 98, 100 de verrouillage.

En présence d'un mécanisme 110 de blocage, l'organe 124 de manoeuvre peut alors cesser de coopérer avec l'organe 92 de commande du dispositif 90 de verrouillage puisque les moyens 98, 100 de verrouillage sont bloqués en position déverrouillée.

Cependant, en raison de la présence des moyens 106 de rappel élastique vers la position verrouillée, on comprendra également qu'un effort exercé accidentellement sur le doigt 120 pourrait provoquer un déblocage inopiné des moyens 98, 100 de verrouillage qui seraient immédiatement rappelés vers la position de verrouillage par les moyens 106 de rappel élastique.

C'est la raison pour laquelle, l'organe 124 de manoeuvre formant les premiers moyens de manoeuvre est avantageusement maintenu dans la deuxième position PV2 après avoir procédé au déverrouillage de l'unité 24 de moulage.

L'organe 124 de manoeuvre et le premier actionneur 130 sont montés solidaires d'un bras 125 de support qui est monté pivotant, par rapport au module M, autour d'un axe B de rotation grâce à quoi l'organe de manoeuvre 124 est apte à suivre en déplacement l'organe 92 de commande par exemple, la première phase du cycle de changement de moule se poursuivant, lorsque l'ouverture de l'unité 24 de moulage est effectuée par les deuxièmes moyens 128 de manoeuvre en actionnant l'organe 84 de commande du dispositif 82 d'ouverture/fermeture vers la position correspondant à la position ouverte de l'unité 24 de moulage.

Avantageusement, le module M de commande comporte des moyens 142 de liaison aptes à lier en déplacement les premiers moyens 124 de manoeuvre du premier dispositif 122 d'actionnement avec les deuxièmes moyens 128 de manoeuvre du deuxième dispositif 126 d'actionnement.

Grâce aux moyens 142 de liaison, on augmente avantageusement la sécurité en évitant tout risque de verrouillage des moyens 98, 100 de verrouillage résultant d'un déblocage non désiré des moyens 112 de blocage.

En effet, en cas de déblocage accidentel des moyens 112 de blocage, le premier organe 124 de manoeuvre occupant sa deuxième position PV2 bloque alors l'organe 92 de commande du dispositif 90 de verrouillage et ce faisant empêche le rappel automatique des moyens 98, 100 de verrouillage en position de verrouillage par les moyens 106 de rappel élastique.

De préférence, les ,moyens de liaison sont constitués par au moins une bielle 142 dont une extrémité est liée aux premiers moyens 124 de manoeuvre du premier dispositif 122 d'actionnement et dont l'autre extrémité est liée aux deuxièmes moyens 128 de manoeuvre du deuxième 126 dispositif d'actionnement.

Plus précisément, la bielle 142 est à l'une de ses extrémités liée au mors 138 de la pince 128 qui est entraîné en déplacement par l'actionneur 132 principal et à l'autre de ses extrémité au bras 125 de support de l'organe 124 de manoeuvre qui est monté pivotant autour de l'axe B de rotation.

Grâce à quoi, les premiers moyens 124 de manoeuvre occupant la deuxième position PV2, correspondant à la position déverrouillée, sont maintenus en contact permanent avec l'organe 92 de commande des moyens 98, 100 de verrouillage lorsque les deuxièmes moyens 128 de manoeuvre sont déplacés entre lesdites première et deuxième positions PL1 et PL2 correspondant respectivement à la position fermée et à la position ouverte de l'unité 24 de moulage.

Les moyens de liaison formé par la bielle 142 permettent de maintenir en permanence le dispositif 90 de verrouillage en position déverrouillée, le premier organe 124 de manoeuvre coopérant avec l'organe 92 de commande quel que soit l'angle d'ouverture de l'unité 24 de moulage.

Ainsi, indépendamment de la présence ou de l'absence d'un mécanisme 110 de blocage, le dispositif 90 de verrouillage est avantageusement maintenu en position déverrouillée.

Le module M de commande comporte un châssis 144 sur lequel sont montés au moins le premier dispositif 122 d'actionnement et le deuxième dispositif 126 d'actionnement.

De préférence, le module M de commande occupe une position fixe par rapport à la machine 10 et le châssis 144 du module M est avantageusement fixé au bâti de la machine 10, en variante fixé au sol.

Par conséquent, les moyens de manoeuvre 124, 128 des dispositifs 122, 126 du module M ne doivent notamment pas interférer avec les organes 84, 92 de commande des dispositifs 82, 90 des unités 24 de moulage lorsque, la machine 10 étant en mode de fonctionnement, dit de production, les unités 24 de moulage sont entraînées en rotation par le carrousel 22.

Avantageusement, au moins les actionneurs desdits premier et deuxième dispositifs 122 et 126 d'actionnement constituent des moyens de changement d'état du module M de commande entre l'état de veille et l'état d'utilisation respectivement.

A l'état de veille du module M de commande, l'actionneur 134 secondaire entraîne le mors 136 mobile de manière que la pince 128 occupe sa position de repos dans laquelle l'organe 84 de commande est susceptible de passer entre les mors 136 et 138 sans contact avec l'un ou l'autre du fait de leur écartement.

A l'état de veille du module M de commande, le premier actionneur 130 est apte à déplacer les premiers moyens 124 de manoeuvre vers une position PV0 dans laquelle lesdits premiers moyens 124 sont escamotés pour ne pas interférer avec l'organe 92 de commande du dispositif 90 de verrouillage de l'unité 24 de moulage.

Dans le mode de réalisation, le premier organe 124 de manoeuvre est déplacé en translation selon la direction verticale, vers le bas, jusqu'à atteindre ladite position PV0 située en dessous de la première position PV1.

En variante, le module M de commande est monté mobile par rapport à la machine 10 et est déplacé entre au moins deux positions correspondant respectivement à l'état de veille et à l'état d'utilisation.

Grâce au premier dispositif 122 d'actionnement et au deuxième dispositif 126 d'actionnement, lorsque le module M de commande est en état d'utilisation, les opérations de déverrouillage et d'ouverture de l'unité 24 de moulage mises en oeuvre lors de la première phase de démontage du cycle de changement de moule, tout comme les opérations de fermeture et de verrouillage lors de la deuxième phase de montage du cycle de changement de moule, sont entièrement automatisées.

Avantageusement et par comparaison avec les solutions de l'état de la technique, le module M de commande permet de supprimer toute intervention d'au moins un opérateur pour réaliser lesdites opérations de déverrouillage et verrouillage ainsi que d'ouverture et fermeture qui étaient auparavant toutes exécutées manuellement.

Le module M de commande selon l'invention permet donc tout particulièrement de réduire la durée d'un cycle de changement de moule.

Toutefois, dans le but de réduire encore la durée d'un cycle de changement de moule, la Demanderesse propose une solution globale dans laquelle toutes les opérations requises pour réaliser un changement de moule sont automatisées.

Grâce à des moyens 42 de fixation, tels que ceux inventés par la Demanderesse, les opérations de libération ou de fixation des éléments 28 de moulage sont également susceptibles d'être automatisées.

Avantageusement, les moyens 42 de fixation sont commandés sélectivement entre les positions de fixation et de libération par des actionneurs 64 associés, de préférence pilotés par une unité de contrôle du module M.

Les éléments 28 de moulage sont en particulier aptes à être libérés par de tels moyens 42 de fixation alors que l'unité 24 de moulage occupe sa position fermée grâce à quoi les éléments 28 de moulage ainsi libérés sont susceptibles d'être extrait automatiquement sous la forme d'un sous-ensemble unitaire transportable (ou moule uni) au moyen d'un dispositif de transport comportant des moyens de préhension, avantageusement associés à un bras robotisé, pour procéder automatiquement à l'extraction d'un tel sous-ensemble unitaire transportable lors de l'ouverture de l'unité 24 de moulage.

Avantageusement, le module M de commande du système comporte un troisième dispositif 146 d'actionnement qui est associé aux moyens 42 de fixation.

Le troisième dispositif 146 d'actionnement est apte à commander sélectivement les moyens 42 de fixation pour provoquer un changement d'état correspondant à la libération ou la fixation de chacun desdits au moins deux éléments 28 de moulage du moule par rapport au porte-moule 26 associé.

Le troisième dispositif 146 d'actionnement comporte au moins un actionneur qui est apte à coopérer, alors que l'unité 24 de moulage occupe la position fermée, avec au moins un organe 44 d'actionnement des moyens 42 de fixation qui sont associés à l'un desdits éléments 28 de moulage, grâce à quoi ledit actionneur est apte à commander les moyens 42 de fixation entre au moins une position de fixation et une position de libération.

Dans le mode de réalisation, ledit au moins un actionneur du troisième dispositif 146 d'actionnement est constitué par les actionneur 64 destinés à coopérer avec la partie 52 de commande des organes 44 d'actionnement des moyens 42 de fixation.

Chaque organe 44 d'actionnement des moyens 42 de fixation de l'élément 28 de moulage est associé à un actionneur 64 de sorte que, comme chacun desdits deux éléments 28 de moulage est fixé sur ses deux bords 48, le troisième dispositif 146 comporte ici quatre actionneurs 64.

De préférence, lesdits actionneurs 64 sont montés solidaires de l'unité 24 de moulage, par l'intermédiaire de la console 66 de sorte que lesdits actionneurs 64 sont embarqués en permanence sur l'unité 24 de moulage de la machine 10.

En variante non représentée, ledit au moins un actionneur est porté par le module M de commande, et non par l'unité 24 de moulage, grâce à quoi le nombre des actionneurs du troisième dispositif 146 d'actionnement associés aux moyens 42 de fixation est réduit, lesdits actionneurs étant susceptibles d'être utilisés pour traiter successivement les unités 24 de moulage de la machine 10 sans que chacune ne comporte des actionneurs tels que les vérins pneumatique.

Selon une telle variante, le troisième dispositif 146 d'actionnement comporte alors au moins un actionneur associé à des moyens de manoeuvre qui sont montés mobiles entre au moins une position de repos et une position de travail.

La position de travail correspond à la position dans laquelle lesdits moyens de manoeuvre sont aptes à coopérer sélectivement avec au moins une partie 52 de commande d'un organe 44 d'actionnement pour provoquer notamment la libération de l'élément 28 de moulage par les moyens 42 de fixation.

Avantageusement, les moyens 42 de fixation comportant un organe 68 de rappel élastique de l'organe 44 d'actionnement vers la position de fixation, les actionneurs 64 du troisième dispositif 146 d'actionnement sont pilotés par l'unité de contrôle du module M de commande pour provoquer sélectivement la libération des éléments 28 de moulage par les moyens 42 de fixation.

Grâce aux organes 68 de rappel élastique associés aux organes 44 d'actionnement, la fixation des éléments 28 de moulage est susceptible d'être obtenue automatiquement en commandant les actionneurs 64 afin qu'un effort de libération cesse d'être appliqué, à l'encontre des organes 68 de rappel élastique, par lesdits actionneurs 64 sur les parties 52 de commande des organes 44 d'actionnement des moyens 42 de fixation.

En variante non représentée, les moyens 42 de fixation comportent des moyens de blocage aptes à bloquer, à l'encontre des organes 68 de rappel élastique, un organe 44 d'actionnement dans une position correspondant à la position de libération.

De préférence, les actionneurs 64 sont des vérins de type pneumatique qui sont alimentés sélectivement en air par le module M de commande, en variante par l'unité 24 de moulage.

Avantageusement, le module M de commande comporte un dispositif, dit d'alimentation en énergie, comportant des moyens d'alimentation aptes à fournir sélectivement de l'énergie au moins audit troisième dispositif 146 d'actionnement associé aux moyens 42 de fixation pour commander sélectivement les moyens 42 de fixation et provoquer un changement d'état correspondant à la libération ou la fixation de chacun desdits au moins deux éléments 28 de moulage du moule.

De préférence, l'énergie fournie par le dispositif d'alimentation est de l'air sous pression en particulier délivré aux actionneurs 64 respectivement associés à chaque organe 44 d'actionnement des moyens 42 de fixation.

De préférence, le module M comporte un seul dispositif d'alimentation en air sous pression apte à alimenter, d'une part, lesdits actionneurs 64 associés aux moyens 42 de fixation et, d'autre part, les moyens d'actionnement des moyens de verrouillage intervenant entre la sellette 38 et le fond de moule 34.

Ledit dispositif d'alimentation en air sera décrit plus en détails ultérieurement.

En variante, le module M comporte au moins deux dispositifs d'alimentation similaires et distincts qui sont respectivement associés aux actionneurs des moyens 42 de fixation des éléments 28 de moulage pour l'un et aux moyens de verrouillage du fond de moule 34 avec la sellette 38 pour l'autre.

Dans l'exemple de réalisation décrit précédemment en référence aux figures 2 à 4, le moule de l'unité 24 de moulage comporte outre les deux éléments 28 de moulage, un fond de moule 34.

Dans la solution de la Demanderesse, le fond de moule 34 est avantageusement extrait hors ou introduit dans l'unité 24 de moulage en même temps que les deux éléments 28 de moulage grâce à la constitution d'un sous-ensemble unitaire transportable avec les trois parties du moule.

Dans l'exemple de réalisation, le fond de moule 34 comporte un rebord 33 qui, en position jointe du moule, coopère avec une partie complémentaire de chaque élément 28 de moulage de manière que le fond de moule 34 est alors immobilisé selon la direction verticale par coopération de formes et enserré par lesdits éléments 28 de moulage.

On a représenté à la figure 4 un moule extrait hors de l'unité 24 de moulage et formant tel sous-ensemble unitaire transportable, lequel comporte donc lesdits deux éléments 28 de moulage et le fond de moule 34.

Les deux éléments 28 de moulage et le fond de moule 34 doivent être maintenus ensemble pour former un tel sous-ensemble unitaire transportable. Avantageusement, la fonction de maintien est assurée par les moyens de préhension du dispositif de transport précité et le moule comporte au moins une partie apte à être saisie par les moyens de préhension alors que l'unité 24 de moulage occupe la position fermée.

Cependant pour pouvoir extraire hors de l'unité 24 de moulage, un moule formant tel sous-ensemble unitaire transportable, le fond de moule 34 doit être libéré, comme sont libérés les éléments 28 de moulage par les moyens 42 de fixation, c'est-à-dire que le fond de moule 34 doit être déverrouillé puis séparé de la sellette 38 et des moyens 36 de support.

Avantageusement, le module M de commande comporte un quatrième dispositif 148 d'actionnement qui est associé aux moyens 36 de support d'un fond de moule 34 complémentaire desdits au moins deux éléments 28 de moulage du moule.

Le quatrième dispositif 148 d'actionnement est apte à provoquer sélectivement au moins la séparation, après déverrouillage, dudit fond de moule 34 et des moyens 36 de support associés.

Avantageusement, le quatrième dispositif 148 d'actionnement est susceptible d'être utilisé pour contrôler lors de la deuxième phase du cycle l'assemblage d'un fond de moule 34 avec les moyens 36 de support associés, plus précisément avec la sellette 38.

Le quatrième dispositif 148 d'actionnement comporte au moins des quatrièmes moyens 150 de manoeuvre mus par au moins un actionneur 152 pour entraîner sélectivement en déplacement lesdits moyens 36 de support.

Les quatrièmes moyens 150 de manoeuvre sont aptes à coopérer avec l'organe 40 de commande pour entraîner lesdits moyens 36 de support en coulissement, selon la direction verticale, respectivement entre une position haute et une position basse, afin de provoquer sélectivement la séparation ou l'assemblage entre le fond de moule 34 et la sellette 38 des moyens 36 de support associés.

Dans l'exemple de réalisation décrit précédemment, la séparation comme l'assemblage du fond de moule 34 et de l'ensemble sellette 38 - moyens 36 de support ne peuvent s'effectuer que si les moyens de verrouillage, par exemple à billes, occupent la position de déverrouillage.

Par conséquent, le déverrouillage du fond de moule 34 et de la sellette 38 doit être effectué avant que les quatrièmes moyens 150 de manoeuvre n'en commandent la séparation.

Comme expliqué précédemment, le déverrouillage entre la sellette 38 et le fond de moule 34 est obtenu en alimentant en air une chambre de commande.

Selon cet exemple de réalisation des moyens de verrouillage du fond de moule 34, les efforts appliqués par l'air sous pression contenu dans ladite chambre de commande provoquent, à l'encontre de moyens de rappel élastique, le déplacement du piston d'une position de blocage correspondant à la position de verrouillage des billes jusqu'à une position de libération correspondant à la position de déverrouillage.

Avantageusement, le module M de commande comporte un cinquième dispositif 154, dit d'alimentation en énergie, comportant des moyens 156 d'alimentation aptes à fournir sélectivement de l'énergie.

De préférence, l'énergie fournie ici par le cinquième dispositif 154 d'alimentation est de l'air sous pression.

Avantageusement, le cinquième dispositif 154 d'alimentation en énergie est apte à fournir sélectivement de l'énergie au moins audit troisième dispositif 146 d'actionnement associé aux moyens 42 de fixation, en particulier délivré aux actionneurs 64 respectivement associés à chaque organe 44 d'actionnement des moyens 42 de fixation selon l'exemple de réalisation.

Avantageusement, le cinquième dispositif 154 d'alimentation est apte à fournir sélectivement de l'énergie aux moyens de verrouillage du fond de moule 34 pour provoquer le changement d'état desdits moyens de verrouillage, ici par déplacement du piston entre ses positions de blocage et de libération correspondant aux positions verrouillée et déverrouillée.

Les moyens 156 d'alimentation sont montés mobiles par rapport au module M de commande entre au moins une position d'alimentation dans laquelle lesdits moyens d'alimentation 156, reliés à une source d'énergie, sont raccordés à l'unité 24 de moulage de manière à pouvoir fournir ladite énergie, et une position d'attente dans laquelle les moyens d'alimentation 156 étant séparés physiquement de l'unité de moulage sont inaptes à fournir de l'énergie.

En position d'alimentation, les moyens d'alimentation 156 sont aptes à alimenter en air tant les actionneurs 64 associés aux moyens 42 de fixation, que d'alimenter les moyens de verrouillage du fond de moule 34.

En position d'alimentation, lesdits moyens d'alimentation 156, reliés à une source d'énergie, alimentent en air lesdits actionneurs 64 associés aux moyens 42 de fixation des éléments 28 de moulage, grâce à quoi lesdits actionneurs 64 sont aptes à provoquer le déplacement de l'organe 44 d'actionnement des moyens 42 de fixation de la position de fixation à la position de libération, pour provoquer la libération des éléments 28 de moulage.

En position d'attente, les moyens d'alimentation 156 ne sont plus aptes à alimenter lesdits actionneurs 64 associés aux moyens 42 de fixation et, dans l'exemple de réalisation, les organes 44 d'actionnement des moyens 42 de fixation sont alors automatiquement rappelés vers la position de fixation par les organes 68 de rappel élastique.

Avantageusement, les actionneurs 64 embarqués sur la console 66 de l'unité 24 de moulage ne sont plus susceptibles d'actionner les organes 44 d'actionnement des moyens 42 de fixation, lesdits actionneurs 64 étant par conséquent exclusivement alimentés par les moyens d'alimentation 156 du cinquième dispositif 154 d'alimentation.

En position d'alimentation, lesdits moyens d'alimentation 156, reliés à une source d'énergie, alimentent en air ladite chambre de commande, provoquant le déplacement du piston de la position de blocage vers la position de libération pour provoquer le déverrouillage dudit fond de moule 34 et de la sellette 38 des moyens 36 de support associés.

En position d'attente, les moyens d'alimentation 156 ne sont plus aptes à alimenter lesdits moyens de verrouillage du fond de moule 34 et, dans l'exemple de réalisation, la chambre de commande n'étant plus alimentée en air, le piston est alors rappelé par les moyens de rappel élastique vers sa position de blocage correspondant à la position de verrouillage des moyens de verrouillage à billes.

Le cinquième dispositif 154 d'alimentation comporte au moins un actionneur 158 apte à entraîner en déplacement les moyens d'alimentation 156 entre lesdites positions d'alimentation et d'attente.

De préférence, les moyens d'alimentation 156 sont déplacés en translation selon la direction verticale par ledit actionneur 158 entre une position basse correspondant à la position d'attente et une position haute correspondant à la position d'alimentation.

Avantageusement, l'actionneur 158 est apte à être piloté par l'unité de commande du module M de commande pour commander sélectivement la position des moyens 156 d'alimentation.

Avantageusement, les moyens d'alimentation 156 ne sont pas susceptibles, en position basse correspondant à la position d'attente, d'interférer avec une unité 24 de moulage lorsque la machine 10 est en mode de fonctionnement, dit de production.

L'actionneur 158 constitue pour le cinquième dispositif 154 d'alimentation en énergie un moyen de changement d'état par rapport au module M, à l'état de veille du module M correspond ladite position basse ou d'attente et à l'état d'utilisation la position haute ou d'alimentation.

Avantageusement, l'actionneur 158 est piloté par l'unité de commande du module M pour déplacer les moyens 156 d'alimentation de la position d'attente vers la position d'alimentation, une fois la position d'alimentation occupée le cinquième dispositif 154 d'alimentation est alors apte à alimenter en air d'une part les actionneurs 64 et, d'autre part la chambre de commande des moyens de verrouillage du fond de moule 34 et ce faisant de provoquer respectivement la libération des éléments 28 de moulage par les moyens 42 de fixation en actionnant les organes 44 d'actionnement et le déverrouillage du fond de moule 34 par rapport à la sellette 38.

Les moyens d'alimentation 156 sont plus particulièrement visibles sur la figure 10.

Selon le mode de réalisation, les moyens d'alimentation 156 comportent au moins un moyen 160 de raccordement, formant un émetteur, apte à être déplacé par l'actionneur 158 entre lesdites positions d'alimentation et d'attente.

Le moyen 160 de raccordement comporte un orifice 162 de sortie raccordé, à une source d'énergie (non représentée) qui est apte à délivrer, sélectivement ou en permanence, de l'air sous pression.

L'unité 24 de moulage comporte un moyen 164 de raccordement, formant un récepteur, qui est complémentaire du moyen 160 de raccordement.

Le moyen 164 de raccordement est porté par la console 32 de l'unité 24 de moulage et comporte également un orifice 166 d'entrée.

Avantageusement, au moins l'un desdits moyens 160 ou 164 de raccordement comporte des moyens d'étanchéité (non représentés) tel qu'un joint.

De préférence, les moyens d'étanchéité sont solidaires du moyen 160 de raccordement formant émetteur.

En position d'alimentation, lesdits moyens 160 et 164 de raccordement coopèrent ensemble et un raccordement étanche est réalisé entre eux de sorte que l'air sous pression circule de l'orifice 162 de sortie vers l'orifice 164 d'entrée.

Avantageusement, l'orifice 164 de sortie communique avec des moyens d'alimentation (non représentés) aptes à délivrer l'air fourni par le cinquième dispositif 154 d'alimentation du module M.

Les actionneurs 64 associés aux moyens 42 de fixation sont par exemple alimentés à travers des conduits réalisés dans la console 66 et l'air est transporté de l'orifice 164 de sortie jusqu'à la console 66 par l'intermédiaire de conduites flexibles comportant des moyens de raccordement rapides à chacune de leurs extrémités.

Avantageusement, le module M de commande comporte des moyens 168 de contrôle qui sont aptes à contrôler si le fond de moule 34 est correctement verrouillé par les moyens de verrouillage intervenant entre le fond de moule 34 et la sellette 38 des moyens 36 de support associés.

De préférence, les moyens 168 de contrôle du verrouillage du fond de moule 34 sont constitués par ledit actionneur 152 associé aux moyens 150 de manoeuvre du quatrième dispositif 148 d'actionnement.

En effet, l'actionneur 152 du quatrième dispositif 148 d'actionnement est apte à être commandé sélectivement, selon un premier mode de fonctionnement, dit d'utilisation, pour provoquer la séparation ou l'assemblage d'un fond de moule 34 et des moyens 36 de support associés comportant la sellette 38.

Avantageusement, l'actionneur 152 du quatrième dispositif 148 d'actionnement est également apte à être commandé sélectivement, selon un second mode de fonctionnement, dit de contrôle, pour contrôler que le fond de moule 34 est correctement verrouillé à la sellette 38 des moyens 36 de support.

Dans le second mode de fonctionnement, le contrôle du verrouillage du fond de moule 34 est réalisé en commandant le quatrième moyen 150 de manoeuvre pour que ledit moyen 150 exerce sur l'organe 40 de commande des moyens 36 de support un effort de traction vers le bas, lorsque le verrouillage est correctement réalisé entre le fond de moule 34 et la sellette 38 le moyen 150 de manoeuvre échoue alors à séparer ledit fond de moule 34 et la sellette 38 des moyens 36 de support.

Ainsi qu'on l'aura compris la manoeuvre de contrôle dans ce second mode de fonctionnement est identique à la manoeuvre effectuée dans le premier mode de fonctionnement pour provoquer la séparation du fond de moule 34 et de la sellette 38 des moyens 36 de support après avoir préalablement commandé les moyens de verrouillage du fond de moule 34 vers la position de déverrouillage.

En cas de verrouillage défectueux, le moyen 150 de manoeuvre provoque la séparation du fond de moule 34 et de la sellette 38 des moyens 36 de support et l'unité de contrôle du module M émet alors avantageusement un avertissement, tel qu'un signal de défaut.

Avantageusement, l'unité de contrôle commande les différents dispositifs du module M et de l'unité 24 de moulage pour procéder de nouveau à l'assemblage et au verrouillage du fond de moule 34 et de la sellette 38 des moyens 36 de support.

Avantageusement, le module M de commande comporte un dispositif 170 de contrôle qui est associé aux moyens 42 de fixation des éléments 28 de moulage du moule.

Le dispositif 170 de contrôle est destiné à contrôler que la fixation desdits au moins deux éléments 28 de moulage du moule aux porte-moules 26 associés est effective, c'est-à-dire bien réalisée.

Avantageusement, le dispositif 170 de contrôle comporte des moyens 172 de contrôle qui sont aptes à déterminer en fonction de la position occupée par une pièce 65 mobile que comporte ledit au moins un actionneur 64 si la fixation des éléments 28 de moulage est correcte ou non.

De préférence, les moyens 172 de contrôle de la fixation sont constitués par au moins un capteur 174 associé à chaque actionneur 64 et apte à déterminer en fonction de la position de la pièce 65 que lesdits moyens 42 de fixation occupent la position de fixation.

En effet, la pièce 65 est liée en déplacement avec l'organe 44 d'actionnement des moyens 42 de fixation de manière que, en position de fixation, lorsque l'organe 44 d'actionnement est rappelé vers le bas par l'organe 68 de rappel élastique ladite pièce 65 est alors déplacée pour occuper une position déterminée que contrôle ledit capteur 174 des moyens 172 de contrôle.

De préférence, les capteurs 174 sont des capteurs de type inductif aptes à déterminer si la pièce 65 de chaque actionneur 64 occupe bien la position déterminée correspondant à la position de fixation des moyens 42 de fixation.

Avantageusement, les moyens 172 de contrôle sont aptes à occuper au moins un état inactif et un état actif dans lequel lesdits moyens 172 de contrôle sont aptes à déterminer la position occupée par lesdits moyens de fixation.

De préférence, les moyens 172 de contrôle, ici les capteurs 174, sont solidaires d'au moins un bras 176 de support qui, commandé en déplacement par un actionneur 178 associé, est monté mobile entre une position de contrôle et une position escamotée.

En effet, chaque capteur 174 doit être positionné en dessous d'un actionneur 64 pour contrôler la position de la pièce 65 toutefois, en mode de fonctionnement de production de la machine 10, il y aurait alors interférence entre le bras 176 de support comportant les capteurs 174 et l'unité de moulage 24, notamment les moyens 36 de support du fond de moule 34.

C'est la raison pour laquelle, les moyens 172 de contrôle doivent pouvoir être escamotés lorsque le module M est à l'état de veille correspondant au mode de fonctionnement de production de la machine 10.

De préférence, le bras 176 de support des capteurs 174 est monté mobile en rotation autour d'un axe C d'orientation verticale et commandé en déplacement par l'actionneur 178 entre lesdites positions de contrôle et escamotée.

Avantageusement, les moyens 172 de contrôle sont susceptibles d'occuper au moins une position de contrôle, correspondant à l'état actif, dans laquelle lesdits moyens 172 de contrôle sont positionnés par rapport auxdits actionneurs 64, associés aux moyens 42 de fixation, pour déterminer la position occupée par lesdits moyens 42 de fixation, et une position escamotée, correspondant à l'état inactif.

Avantageusement, ledit bras 176 de support des moyens 172 de contrôle et l'actionneur 178 associé constituent des moyens de changement d'état des moyens 172 de contrôle entre lesdits état actif et inactif correspondant respectivement aux états d'utilisation et de veille du module M.

Les capteurs 174 de type inductif ne constitue qu'une exemple de réalisation non limitatif, en variante les moyens 172 de contrôle sont constitués par des moyens de contrôle tels qu'une caméra associé à un logiciel de traitement d'image.

Selon cette variante, les moyens 172 de contrôle sont solidaires du module M de commande et apte à effectuer à distance un contrôle de l'état ou position des moyens 42 de fixation.

Avantageusement, le module M de commande comporte des moyens 180 de butée qui sont aptes à intervenir sélectivement pour bloquer temporairement, avant que la position fermée ne soit atteinte, l'unité 24 de moulage dans une position donnée pour laquelle les moyens 42 de fixation sont susceptibles d'occuper une position, dite de préfixation, qui correspond à une position dans laquelle les moyens 42 de fixation sont partiellement engagés sans avoir encore atteints la position de fixation des éléments 28 de moulage.

Dans le mode de réalisation, les moyens 180 de butée sont de préférence associés au deuxième dispositif 126 d'actionnement du dispositif 82 d'ouverture/fermeture.

Les moyens 180 de butée coopèrent sélectivement avec les deuxièmes moyens 128 de manoeuvre de l'organe 84 de commande du dispositif 82 d'ouverture et de fermeture pour bloquer temporairement l'unité 24 de moulage dans ladite position donnée.

La position donnée dans laquelle l'unité 24 de moulage est bloquée correspond à une position voisine de la position fermée et se caractérise par la présence d'un jeu déterminé ou écartement subsistant entre les porte-moules 26, ladite position donnée correspondant à la position de préfixation des éléments 28 de moulage par les moyens 42 de fixation.

En position de préfixation, les ergots 54 commencent à s'engager dans les crans 56 mais les éléments 28 de moulage ne sont pas encore fixés, ni plaqués contre la paroi du logement 50.

Les moyens 180 de butée sont destinés à éviter ou à tout le moins à limiter que des efforts de torsion ne sollicitent les moyens 42 de fixation et tout particulièrement les organes 44 d'actionnement comportant les ergots 54.

Les moyens 180 de butée sont montés mobiles entre au moins :
- une position escamotée dans laquelle les moyens 180 de butée n'interfèrent pas avec les deuxièmes moyens 128 de manoeuvre de l'organe 84 de commande du dispositif 82 d'ouverture/fermeture, lesquels deuxièmes moyens 128 de manoeuvre sont libres d'être commandés en déplacement entre les première et deuxième positions PL1, PL2, et
- une position déployée dans laquelle les moyens 180 de butée sont aptes à coopérer avec les deuxièmes 128 moyens de manoeuvre pour bloquer temporairement l'unité 24 de moulage dans ladite position donnée dans laquelle les moyens 42 de fixation des éléments 28 de moulage sont susceptibles d'occuper ladite position de préfixation.

Avantageusement, les moyens 180 de butée comportent un élément de butée 182 qui est monté mobile entre lesdites positions déployée et escamotée par l'intermédiaire d'un actionneur 184 associé.

L'actionneur 184 est apte à commander sélectivement en déplacement, ici en translation selon la direction verticale, ledit élément 182 de butée pour le déplacer de la position escamotée jusqu'à la position déployée dans laquelle ledit élément de butée 182 coopère avec un second élément 186 de butée qui, complémentaire de l'élément 182 de butée, est lié en déplacement au mors 138 de la pince 128 et à l'actionneur principal 132, tel que visible sur la figure 10.

Ainsi, lorsque l'actionneur principal 132 exerce un effort de traction, longitudinalement de l'arrière vers l'avant, sur l'organe 84 de commande du dispositif 82 d'ouverture et de fermeture pour provoquer la fermeture des porte-moules 26 de l'unité 24 de moulage, ledit second élément 186 de butée vient au contact de l'élément 182 de butée qui, en position déployée, se trouve sur son trajet et interrompt alors la course de fermeture de l'unité 24 de moulage.

Avantageusement, les moyens 180 de butée occupe ladite position escamotée lorsque le module M de commande est à l'état de veille de sorte que l'actionneur 184 associée constitue un moyen de changement d'état.

Avantageusement, le système automatisé selon l'invention comporte une unité de contrôle (non représentée) apte à commander ledit au moins un module M de commande en pilotant en synchronisation, selon une séquence déterminée, au moins les actionneurs 130, 132 et 134 des premier et deuxième dispositifs 122 et 126 dudit module M de commande pour réaliser automatiquement au moins une partie des opérations changement de moule d'une unité 24 de moulage.

Avantageusement, l'unité de contrôle est apte à commander l'ensemble des actionneurs du module M, en particulier les actionneurs 152, 158, 178 et 184 ainsi que les actionneurs 64 associés aux moyens 42 de fixation.

L'unité de contrôle est apte à piloter, en synchronisation, d'une part au moins les premier et deuxième dispositifs 122, 126 du module M de commande et, d'autre part, un dispositif (non représenté) de transport d'un moule, dit moule uni, constitué par lesdits au moins deux éléments 28 de moulage maintenus dans une position jointe par des moyens destinés à les réunir ensemble pour former un sous-ensemble unitaire transportable.

Avantageusement, le dispositif de transport comporte au moins une tête qui comporte des moyens de préhension aptes à coopérer avec au moins une partie d'un moule uni, accessible aux moyens de préhension alors que l'unité 24 de moulage est en position fermée, de manière à procéder à l'extraction d'un moule uni hors des porte-moules 26 en position ouverte de l'unité 24 de moulage et/ou à l'introduction d'un moule uni entre lesdits porte-moules 26 en position ouverte de l'unité 24 de moulage.

Dans le mode de réalisation, le système automatisé comporte un module M de commande, en variante le système comporte au moins deux modules M de commande qui sont commandés, simultanément ou successivement, par l'unité de contrôle du système 1 pour effectuer un cycle de changement de moule sans changement des positions de référence déterminées des unités 24 de moulage associées.

Avantageusement, le ou les modules M de commande sont agencés dans l'une ou dans chacune des zones d'intervention de la machine 10 qui sont respectivement référencée Z1, Z2 et Z3 sur la figure 1.

## Revendications

1. Système (1) automatisé pour le changement de moule d'une unité (24) de moulage équipant une machine (10) de fabrication de récipients, ladite unité (24) de moulage comportant :
- au moins deux porte-moules (26) qui sont montés mobiles entre une position ouverte et une position fermée de l'unité (24) de moulage et un moule qui comporte au moins deux éléments (28) de moulage fixés chacun de manière démontable à un porte-moule (26) associé par des moyens (42) de fixation,
- un dispositif (82) d'ouverture et de fermeture de l'unité de moulage (24) comportant au moins un organe (84) de commande apte à déplacer au moins l'un des porte-moules (26) entre lesdites positions ouverte et fermée, et
- un dispositif (90) de verrouillage de l'unité (24) de moulage comportant au moins un organe (92) de commande apte à actionner des moyens (98, 100) de verrouillage qui sont montés mobiles entre :
• une position verrouillée dans laquelle les porte-moules (26) de l'unité (24) de moulage sont maintenus en position fermée par lesdits moyens de verrouillage, et
• une position déverrouillée dans laquelle les porte-moules (26) sont libres d'être déplacés entre les positions fermée et ouverte,
**caractérisé en ce que** le système (1) comporte au moins un module (M) de commande comportant au moins :
- un premier dispositif (122) d'actionnement qui, associé au dispositif (90) de verrouillage de l'unité (24) de moulage, comporte des premiers moyens (124) de manoeuvre qui, lorsque l'unité (24) de moulage occupe une position de référence déterminée par rapport audit module (M), coopèrent avec l'organe (92) de commande du dispositif (90) de verrouillage pour commander sélectivement les moyens (98, 100) de verrouillage entre lesdites positions verrouillée et déverrouillée, lesdits premiers moyens (124) de manoeuvre étant montés mobiles par rapport au module (M), entre au moins :
• une première position (PV1) correspondant à la position verrouillée des moyens de verrouillage ; et
• une deuxième position (PV2) correspondant à la position déverrouillée des moyens de verrouillage,
- un deuxième dispositif (126) d'actionnement qui, associé au dispositif (82) d'ouverture et de fermeture de l'unité (24) de moulage, comporte des deuxièmes moyens (128) de manoeuvre qui sont distincts des premiers moyens (124) de manoeuvre du premier dispositif (122) d'actionnement et qui, lorsque l'unité (24) de moulage occupe ladite position de référence déterminée par rapport audit module (M), coopèrent avec l'organe (84) de commande du dispositif (82) d'ouverture et de fermeture pour commander sélectivement l'ouverture et la fermeture de l'unité (24) de moulage, lesdits deuxièmes moyens (128) de manoeuvre étant montés mobiles par rapport au module (M), entre au moins :
• une première position (PL1) correspondant à la position fermée de l'unité (24) de moulage ; et
• une deuxième position (PL2) correspondant à la position ouverte de l'unité (24) de moulage.

2. Système selon la revendication 1, **caractérisé en ce que** le premier dispositif (122) d'actionnement comporte au moins un premier actionneur (130) pour déplacer sélectivement, entre au moins la première position (PV1) et la deuxième position (PV2), un premier organe (124) de manoeuvre formant lesdits premiers moyens de manoeuvre.

3. Système selon la revendication 1, **caractérisé en ce que** le deuxième dispositif (126) d'actionnement comporte au moins un actionneur (132) principal pour déplacer sélectivement, entre au moins la première position (PL1) et la deuxième position (PL2), un deuxième organe (128) de manoeuvre formant lesdits deuxièmes moyens de manoeuvre.

4. Système selon la revendication 1, **caractérisé en ce que** le module (M) de commande comporte des moyens (142) de liaison aptes à lier en déplacement les premiers moyens (124) de manoeuvre du premier dispositif (122) d'actionnement avec les deuxièmes moyens (128) de manoeuvre du deuxième dispositif (126) d'actionnement.

5. Système selon la revendication 1, **caractérisé en ce que** le module (M) de commande comporte un troisième dispositif (64) d'actionnement qui, associé aux moyens (42) de fixation, commande sélectivement les moyens (42) de fixation pour provoquer un changement d'état correspondant à la libération ou la fixation, au porte-moule (26) associé, de chacun desdits au moins deux éléments (28) de moulage du moule.

6. Système selon la revendication 1, **caractérisé en ce que** le module (M) de commande comporte un quatrième dispositif (148) d'actionnement qui, associé à des moyens (36) de support d'un fond de moule (34) complémentaire desdits au moins deux éléments (28) de moulage du moule, est apte à provoquer sélectivement la séparation dudit fond de moule (34) et des moyens (36) de support associés ou l'assemblage dudit fond de moule (34) et des moyens (36) de support associés.

7. Système selon la revendication 1, **caractérisé en ce que** le module (M) de commande comporte des moyens de contrôle (150, 152) qui sont aptes à contrôler qu'un fond de moule (34) complémentaire desdits au moins deux éléments (28) de moulage du moule est correctement verrouillé par des moyens de verrouillage intervenant entre le fond de moule (34) et des moyens (36) de support associés.

8. Système selon les revendications 1 et 7, **caractérisé en ce que** le module (M) de commande comporte un cinquième dispositif (154) d'alimentation, comportant des moyens (156) d'alimentation en énergie aptes à fournir sélectivement de l'énergie pour l'actionnement des moyens (42) de fixation des éléments (28) de moulage et/ou pour l'actionnement des moyens de verrouillage du fond de moule (34) avec les moyens (36) de support associés.

9. Système selon la revendication 1, **caractérisé en ce que** le module (M) de commande comporte un sixième dispositif de contrôle qui, associé aux moyens (42) de fixation des éléments (28) de moulage du moule, est apte à contrôler la fixation, par les moyen (42) de fixation, desdits au moins deux éléments (28) de moulage du moule aux porte-moules (26) associés.

10. Système selon la revendication 1, **caractérisé en ce que** le module (M) de commande comporte des moyens (180) de butée qui sont aptes à intervenir sélectivement pour bloquer temporairement, avant que la position fermée ne soit atteinte, l'unité (24) de moulage dans une position intermédiaire donnée pour laquelle les moyens (42) de fixation sont susceptibles d'occuper une position, dite de préfixation, qui correspond à une position dans laquelle les moyens (42) de fixation sont partiellement engagés sans que soit atteinte la position de fixation des éléments (28) de moulage.

11. Système selon la revendication 1, **caractérisé en ce que** le module (M) de commande est susceptible d'occuper au moins :
- un état de veille associé à un mode de fonctionnement de la machine (10), dit de production, pour la fabrication de récipients par la machine, et
- un état d'utilisation associé à un autre mode de fonctionnement de la machine (10), dit d'intervention, dans lequel ledit module (M) est apte à commander sélectivement au moins le dispositif (90) de verrouillage et le dispositif (82) d'ouverture/fermeture de l'unité (24) de moulage pour automatiser au moins l'actionnement des organes (90, 84) de commande desdits dispositifs (90, 82) lors du changement de moule d'une unité (24) de moulage.

12. Système selon l'une quelconque des revendications 1 à 11, **caractérisé en ce que** le système comporte une unité de contrôle apte à commander ledit au moins un module (M) de commande en pilotant en synchronisation, selon une séquence déterminée, au moins les actionneurs (130, 132, 134) des premier et deuxième dispositifs (122, 124) dudit module (M) de commande pour réaliser automatiquement tout ou partie des opérations changement de moule d'une unité (24) de moulage.

## Patentansprüche

1. Automatisiertes System (1) zum Wechseln einer Form einer Formeinheit (24), das eine Maschine (10) zur Herstellung von Behältern ausrüstet, wobei die Formeinheit (24) Folgendes aufweist:
- mindestens zwei Formträger (26), die beweglich zwischen einer geöffneten Position und einer geschlossenen Position der Formeinheit (24) montiert sind, und eine Form, die mindestens zwei Formelemente (28) aufweist, die jeweils abnehmbar an einem Formträger (26) befestigt sind, der durch Befestigungsmittel (42) verbunden ist,
- eine Vorrichtung (82) zum Öffnen und Schließen der Formeinheit (24), die mindestens ein Steuerorgan (84) aufweist, das geeignet ist, mindestens einen der Formträger (26) zwischen der geöffneten und der geschlossenen Position zu verschieben, und
- eine Vorrichtung (90) zum Verriegeln der Formeinheit (24), die mindestens ein Steuerorgan (92) aufweist, das geeignet ist, die Verriegelungsmittel (98, 100) zu betätigen, die beweglich zwischen:
• einer verriegelten Position, in der die Formträger (26) der Formeinheit (24) durch die Verriegelungsmittel in geschlossener Position gehalten werden, und
• einer entriegelten Position, in der die Formträger (26) frei sind, um zwischen der geschlossenen und der geöffneten Position verschoben zu werden, montiert sind,
**dadurch gekennzeichnet, dass** das System (1) mindestens ein Steuermodul (M) aufweist, das mindestens Folgendes aufweist:
- eine erste Betätigungsvorrichtung (122), die, verbunden mit der Vorrichtung (90) zum Verriegeln der Formeinheit (24), erste Betätigungsmittel (124) aufweist, die, wenn die Formeinheit (24) eine bestimmte Referenzposition gegenüber dem Modul (M) einnimmt, mit dem Steuerorgan (92) der Vorrichtung (90) zum Verriegeln zusammenwirken, um die Verriegelungsmittel (98, 100) selektiv zwischen der verriegelten und der entriegelten Position zu steuern, wobei die ersten Betätigungsmittel (124) beweglich gegenüber dem Modul (M) zwischen mindestens:
• einer ersten Position (PV1), die der verriegelten Position der Verriegelungsmittel entspricht; und
• einer zweiten Position (PV2), die der entriegelten Position der Verriegelungsmittel entspricht, montiert sind,
- eine zweite Betätigungsvorrichtung (126), die, verbunden mit der Vorrichtung (82) zum Öffnen und Schließen der Formeinheit (24), zweite Betätigungsmittel (128) aufweist, die sich von den ersten Betätigungsmitteln (124) der ersten Betätigungsvorrichtung (122) unterscheiden und die, wenn die Formeinheit (24) die bestimmte Referenzposition gegenüber dem Modul (M) einnimmt, mit dem Steuerorgan (84) der Vorrichtung (82) zum Öffnen und Schließen zusammenwirken, um das Öffnen und Schließen der Formeinheit (24) selektiv zu steuern, wobei die zweiten Betätigungsmittel (128) beweglich gegenüber dem Modul (M) zwischen mindestens:
• einer ersten Position (PL1), die der geschlossenen Position der Formeinheit (24) entspricht; und
• einer zweiten Position (PL2), die der geöffneten Position der Formeinheit (24) entspricht, montiert sind.

2. System nach Anspruch 1, **dadurch gekennzeichnet, dass** die erste Betätigungsvorrichtung (122) mindestens einen ersten Aktuator (130) aufweist, um ein erstes Betätigungsorgan (124), das die ersten Betätigungsmittel bildet, zwischen mindestens der ersten Position (PV1) und der zweiten Position (PV2) selektiv zu verschieben.

3. System nach Anspruch 1, **dadurch gekennzeichnet, dass** die zweite Betätigungsvorrichtung (126) mindestens einen Hauptaktuator (132) aufweist, um ein zweites Betätigungsorgan (128), das die zweiten Betätigungsmittel bildet, zwischen mindestens der ersten Position (PL1) und der zweiten Position (PL2) selektiv zu verschieben.

4. System nach Anspruch 1, **dadurch gekennzeichnet, dass** das Steuermodul (M) Verbindungsmittel (142) aufweist, die geeignet sind, die ersten Betätigungsmittel (124) der ersten Betätigungsvorrichtung (122) mit den zweiten Betätigungsmitteln (128) der zweiten Betätigungsvorrichtung (126) in Verschiebung zu verbinden.

5. System nach Anspruch 1, **dadurch gekennzeichnet, dass** das Steuermodul (M) eine dritte Betätigungsvorrichtung (64) aufweist, die, verbunden mit den Befestigungsmitteln (42), die Befestigungsmittel (42) selektiv steuert, um eine Zustandsänderung zu bewirken, die dem Freigeben oder dem Befestigen von jedem der mindestens zwei Formelemente (28) der Form an dem verbundenen Formträger (26) entspricht.

6. System nach Anspruch 1, **dadurch gekennzeichnet, dass** das Steuermodul (M) eine vierte Betätigungsvorrichtung (148) aufweist, die, verbunden mit Trägermitteln (36) eines Formbodens (34), der komplementär zu den mindestens zwei Formelementen (28) der Form ist, geeignet ist, selektiv das Trennen des Formbodens (34) und der verbundenen Trägermittel (36) oder das Zusammenfügen des Formbodens (34) und der verbundenen Trägermittel (36) zu bewirken.

7. System nach Anspruch 1, **dadurch gekennzeichnet, dass** das Steuermodul (M) Kontrollmittel (150, 152) aufweist, die geeignet sind, zu kontrollieren, dass ein Formboden (34), der komplementär zu den mindestens zwei Formelementen (28) der Form ist, korrekt von den Verriegelungsmitteln verriegelt ist, die zwischen dem Formboden (34) und den verbundenen Trägermitteln (36) eingreifen.

8. System nach den Ansprüchen 1 und 7, **dadurch gekennzeichnet, dass** das Steuermodul (M) eine fünfte Stromversorgungsvorrichtung (154) aufweist, die Stromversorgungsmittel (156) aufweist, die geeignet sind, selektiv Strom zum Betätigen der Befestigungsmittel (42) der Formelemente (28) und/oder zum Betätigen der Verriegelungsmittel des Formbodens (34) mit den verbundenen Trägermitteln (36) zu liefern.

9. System nach Anspruch 1, **dadurch gekennzeichnet, dass** das Steuermodul (M) eine sechste Kontrollvorrichtung aufweist, die, verbunden mit den Befestigungsmitteln (42) der Formelemente (28) der Form, geeignet ist, die Befestigung der mindestens zwei Formelemente (28) der Form an den verbundenen Formträgern (26) durch die Befestigungsmittel (42) zu kontrollieren.

10. System nach Anspruch 1, **dadurch gekennzeichnet, dass** das Steuermodul (M) Anschlagmittel (180) aufweist, die geeignet sind, selektiv einzugreifen, um die Formeinheit (24) in einer gegebenen Zwischenposition, für die die Befestigungsmittel (42) eine Position, die sogenannte Vorbefestigungsposition, einnehmen können, die einer Position entspricht, in der die Befestigungsmittel (42) teilweise eingesetzt sind, ohne dass die Befestigungsposition der Formelemente (28) erreicht ist, vorübergehend zu blockieren, bevor die geschlossene Position erreicht ist.

11. System nach Anspruch 1, **dadurch gekennzeichnet, dass** das Steuermodul (M) mindestens Folgendes einnehmen kann:
- einen Bereitschaftszustand, der mit einem Betriebsmodus der Maschine (10), dem sogenannten Produktionsmodus, zur Herstellung von Behältern durch die Maschine verbunden ist, und
- einen Verwendungszustand, der mit einem anderen Betriebsmodus der Maschine (10), dem sogenannten Eingriffsmodus, verbunden ist, in dem das Modul (M) geeignet ist, mindestens die Vorrichtung (90) zum Verriegeln und die Vorrichtung (82) zum Öffnen/Schließen der Formeinheit (24) selektiv zu steuern, um mindestens das Betätigen der Steuerorgane (90, 84) der Vorrichtungen (90, 82) beim Wechseln einer Form einer Formeinheit (24) zu automatisieren.

12. System nach einem der Ansprüche 1 bis 11, **dadurch gekennzeichnet, dass** das System eine Steuereinheit aufweist, die geeignet ist, das mindestens eine Steuermodul (M) zu steuern, indem es in einer bestimmten Reihenfolge mindestens die Aktuatoren (130, 132, 134) der ersten und der zweiten Vorrichtung (122, 124) des Steuermoduls (M) synchron steuert, um die Operationen des Wechseln einer Form einer Formeinheit (24) vollständig oder teilweise automatisch durchzuführen.

## Claims

1. Automated system (1) for changing a mold of a molding unit (24) with which a machine (10) for manufacturing containers is provided, said molding unit (24) comprising:
- at least two mold holders (26) which are fitted such as to be mobile between an open position and a closed position of the molding unit (24), and a mold which comprises at least two molding elements (28) which are each secured in a removable manner on an associated mold holder (26) by securing means (42);
- a device (82) for opening and closure of the molding unit (24), comprising at least one control member (84) which can displace at least one of the mold holders (26) between said open and closed positions; and
- a locking device (90) of the molding unit (24) comprising at least one control member (92) which can actuate locking means (98, 100) which are fitted such as to be mobile between:
• a locked position in which the mold holders (26) of the molding unit (24) are kept in the closed position by said locking means; and
• an unlocked position in which the mold holders (26) are free to be displaced between the closed and open positions,
**characterized in that** the system (1) comprises at least one control module (M) comprising at least:
- a first actuating device (122) which, associated with the locking device (90) of the molding unit (24), comprises first maneuvering means (124) which, when the molding unit (24) occupies a predetermined reference position relative to said module (M), co-operate with the control member (92) of the locking device (90), in order to control the locking means (98, 100) selectively between said locked and unlocked positions, said first maneuvering means (124) being fitted such as to be mobile relative to the module (M), between at least:
• a first position (PV1) corresponding to the locked position of the locking means; and
• a second position (PV2) corresponding to the unlocked position of the locking means;
- a second actuating device (126) which, associated with the device (82) for opening and closure of the molding unit (24), comprises second maneuvering means (128) which are distinct from the first maneuvering means (124) of the first actuating device (122) and which, when the molding unit (24) occupies said predetermined reference position relative to said module (M), co-operate with the control member (84) of the device (82) for opening and closure in order to control selectively the opening and closure of the molding unit (24), said second maneuvering means (128) being fitted such as to be mobile relative to the module (M), between at least:
• a first position (PL1) corresponding to the closed position of the molding unit (24); and
• a second position (PL2) corresponding to the open position of the molding unit (24).

2. System according to Claim 1, **characterized in that** the first actuating device (122) comprises at least one first actuator (130), in order to displace selectively between at least the first position (PV1) and the second position (PV2), a first maneuvering member (124) which forms said first maneuvering means.

3. System according to Claim 1, **characterized in that** the second actuating device (126) comprises at least one main actuator (132), in order to displace selectively between at least the first position (PL1) and the second position (PL2), a second maneuvering member (128) which forms said second maneuvering means.

4. System according to Claim 1, **characterized in that** the control module (M) comprises connection means (142) which can connect the first maneuvering means (124) of the first actuating device (122) in displacement with the second maneuvering means (128) of the second actuating device (126).

5. System according to Claim 1, **characterized in that** the control module (M) comprises a third actuating device (64) which, associated with the securing means (42), controls the securing means (42) selectively in order to give rise to a change of state corresponding to the release or securing, on the associated mold holder (26), of each of said at least two molding elements (28) of the mold.

6. System according to Claim 1, **characterized in that** the control module (M) comprises a fourth actuating device (148) which, associated with means (36) for supporting a mold base (34) which is complementary with said at least two molding elements (28) of the mold, can give rise selectively to the separation of said mold base (34) and the associated support means (36) or assembly of said mold base (34) and the associated support means (36).

7. System according to Claim 1, **characterized in that** the control module (M) comprises control means (150, 152) which can check that a mold base (34) which is complementary with said at least two molding elements (28) of the mold, is correctly locked by locking means which intervene between the mold base (34) and the associated support means (36).

8. System according to Claims 1 and 7, **characterized in that** the control module (M) comprises a fifth supply device (154), comprising energy supply means (156) which can supply energy selectively for actuation of the means (42) for securing of the molding elements (28) and/or for actuation of the means for locking the mold base (34) with the associated support means (36).

9. System according to Claim 1, **characterized in that** the control module (M) comprises a sixth control device which, associated with the means (42) for securing of the molding elements (28) of the mold, can control the securing by the means (42) for securing, of said at least two molding elements (28) of the mold on the associated mold holders (26).

10. System according to Claim 1, **characterized in that** the control module (M) comprises stop means (180) which can intervene selectively in order, before the closed position is reached, to block the molding unit (24) temporarily in a given intermediate position for which the securing means (42) can occupy a position, known as the pre-securing position, which corresponds to a position in which the securing means (42) are partially engaged, without the securing position of the molding elements (28) having been reached.

11. System according to Claim 1, **characterized in that** the control module (M) can occupy at least:
- a state of monitoring associated with an operating mode of the machine (10), known as the production mode, for the manufacture of containers by the machine; and
- a state of use associated with another operating mode of the machine (10), known as the intervention mode, in which said module (M) can control selectively at least the locking device (90) and the opening/closure device (82) of the molding unit (24), in order to automate at least the actuation of the control members (90, 84) of said devices (90, 82) during the mold change of a molding unit (24).

12. System according to any one of Claims 1 to 11, **characterized in that** the system comprises a control unit which can control said at least one control module (M) by controlling in a synchronized manner, according to a predetermined sequence, at least the actuators (130, 132, 134) of the first and second devices (122, 124) of said control module (M), in order to carry out automatically all or part of the mold change operations of a molding unit (24).
